# EUROPÄISCHE PATENTSCHRIFT

(11) **EP 1 362 659 B1**
(45) Veröffentlichungstag und Bekanntmachung des Hinweises auf die Patenterteilung: **23.03.2011**
(21) Anmeldenummer: 03011272.6
(22) Anmeldetag: 16.05.2003
(51) Int. Cl.: B23D 77/00

(54) **Werkzeug, Vorrichtung und Verfahren zum Entgraten von Bohrungen**
Tool, device and method for deburring bores
Outil, dispositif et procédé pour l'ébavurage de trous

(30) Priorität: 17.05.2002 DE 10222155; 18.10.2002 DE 10248777; 14.05.2003 DE 10321670
(43) Veröffentlichungstag der Anmeldung: 19.11.2003
(73) Patentinhaber: Gühring, Jörg, Dr., 72458 Albstadt (DE)
(72) Erfinder: Gaiser, Gilbert, c/o Gühring OHG, 72488 Sigmaringen (DE); Hebisch, Harald, c/o Gühring OHG, 72488 Sigmaringen (DE)
(74) Vertreter: Winter, Brandl, Fürniss, Hübner, Röss, Kaiser, Polte - Partnerschaft

(56) Entgegenhaltungen:
- DE-A1- 10 118 596
- DE-B- 1 167 302
- JP-A- 08 318 419
- US-A- 4 563 837
- US-A- 5 238 335
- US-A1- 2002 013 988

## Beschreibung

Die Erfindung betrifft ein Werkzeug gemäß dem Oberbegriff des Patentanspruchs 1 zum Entgraten von Bohrungen, wie zum Beispiel von Bohrungen, die seitlich in eine beispielsweise zylindrische Ausnehmung münden. Die Erfindung betrifft ferner eine Vorrichtung und ein Verfahren zum Entgraten von derartigen Bohrungen, wobei ein erfindungsgemäßes Werkzeug Anwendung finden soll.

Das Entgraten von Bohrungen, die seitlich in eine beispielsweise zylindrische Ausnehmung münden, stellt ein großes Problem dar. Derartige Bohrungen sind zum Beispiele auf dem Gebiet der Kraftfahrzeugtechnik - bei Radialbohrungen, die in eine zentrale Axialbohrung der Nockenwelle oder der Kurbelwelle münden - und der Mobilhydraulik dann unumgänglich, wenn es beispielsweise darum geht, einen in einer zentralen Bohrung, aufgenommenen Ventilkolben über Steueranschlüsse in Form von Radialkanälen anzusteuern. Da diese Radialkanäle in der Regel in einem Bohrbearbeitungsgang hergestellt werden müssen, kann selbst bei spezieller Gestaltung des Bohrwerkzeugs nicht zuverlässig ausgeschlossen werden, dass in Bereich, in dem der Radialkanal in die zentrale Bohrungsausnehmung mündet, ein Grat oder ein Restspan verbleibt.

Abgesehen davon, dass dieser Span die Strömungsverhältnisse beeinflusst und damit die Justierung und Funktion der entsprechenden hydraulischen Steuerung beeinträchtigt, besteht das besondere Problem, dass ein solcher Span, wenn er nicht vor Inbetriebnahme entfernt wird, nach gewisser Zeit abgerissen wird und im System folgenschwere Schäden verursacht.

Man hat daher seit jeher und im Zuge der immer empfindlicher werdenden Steuerungstechnik mit zunehmendem Aufwand versucht, diese Spanreste so vollständig wie möglich von der Radialkanalmündung zu entfernen. Dabei sind speziell gestaltete Werkzeuge zum Einsatz gelangt, mit denen der am Schaft sitzende Schneidkopf möglichst positionsgenau an den zu entfernenden Span herangeführt werden konnte. Die erforderliche große Präzision führt aber dazu, dass sich der Herstellungsprozess wesentlich verteuerte.

Aus dem Dokument US 4,594,033 ist ein Werkzeug gemäß dem Oberbegriff des Patentanspruchs 1 bekannt geworden. Dabei wird ein Schneidkopf von einer flexiblen Antriebswelle getragen, die sich durch ein Führungselement mit einem radialen Schlitz erstreckt. Mittels einer Auslenkstange kann die flexible Welle mit einer Radialkraft beaufschlagt werden, so dass sich die flexible Welle während ihrer Drehbewegung zusammen mit dem Schneidkopf radial bewegen kann. Es ist also eine Radialkraft-Erzeugungseinrichtung vorhanden, die von einer Einheit gebildet ist, welche vom Werkzeug getrennt ist.

Aus dem Dokument US 2002/0013988 A1 ist ein System bekannt, bei dem ein Entgratkopf an einer dünnen flexiblen Welle hängt, die entweder über ein elastisches Gelenk mit einer Antriebswelle gekoppelt ist oder selbst durch geeignete Auswahl von Material oder Geometrie bereits extrem flexibel ist. Der Erfindung liegt daher die Aufgabe zugrunde, ein Werkzeug und eine Vorrichtung sowie ein Verfahren bereitzustellen, mit dem bzw. mit der es gelingt, den Entgratvorgang wesentlich wirtschaftlicher, aber dennoch zuverlässig und fehlerfrei durchzuführen.

Diese Aufgabe wird hinsichtlich des Werkzeugs durch die Merkmale des Anspruchs 1, hinsichtlich der Vorrichtung durch die Merkmale des Anspruchs 36 und hinsichtlich des Verfahrens durch die Verfahrensschritte des Anspruchs 42 gelöst.

Erfindungsgemäß wird in das aus Schaft und Schneidkopf bestehende Werkzeug eine Radialkraft-Erzeugungseinrichtung integriert, mit der es gelingt, den Schneidkopf eines sehr einfach aufgebauten Werkzeugs, das mit verhältnismäßig geringer Präzision in die Ausnehmung oder Bohrung eingeführt wird, radial auszulenken, so dass der bezüglich des Werkstücks eine Relativ-Drehbewegung ausführende, beispielsweise drehend angetriebene Schneidkopf eine Art "kreisende" bzw. "taumelnde" Schab-oder Schneidbewegung entlang der Innenoberfläche der Ausnehmung oder Bohrung und damit der Mündungsöffnung beispielsweise des Radialkanals ausführt.

Die Schneide des Werkzeugs bewegt sich dabei bezüglich der Ausnehmung im Werkstück auf einer Zykloide. Es hat sich gezeigt, dass es auf diese Weise gelingt, den Grat bzw. die ggfs. vorhandenen Spanreste schonend und dennoch reproduzierbar und zuverlässig abzutragen, ohne Gefahr zu laufen, dass an anderer Stelle weitere Restspanbildung auftritt.

Die auf den Schneidkopf einwirkende Radialkraft zu dessen vorzugsweise gesteuerter radialer Auslenkung wird auf zweierlei Art realisiert:
Eine besonders einfache Konstruktion erhält man dadurch, dass ein in gewöhnlichen Bearbeitungszentren ohnehin vorhandenes unter Druck stehendes Strömungsmittel, wie z.B. ein bei der spanabhebenden Bearbeitung zum Einsatz kommendes Kühl- und Schmiermittel, dazu herangezogen wird, den Schneidkopf radial auszulenken, so dass er die entgratenende Funktion erfüllen.

Bei dieser Auslenkung spielen sowohl die durch den Staudruck des Strömungsmittels im Bereich des Schneidkopfs bzw. in dessen näherer Umgebung als auch die durch die Umlenkung der Strömungsmittelströmung hervorgerufenen Impulskräfte eine Rolle, so dass die wirksame Radialkraft gut steuerbar bleibt.

Weil die Eingriffsstelle des Werkzeugs dabei ständig mit unter Druck stehendem Strömungsmittel gespült wird, wird der spanabtragende Effekt noch verstärkt. Über den Druck des Strömungsmittels und/oder die Geometrie des Werkzeugschafts lässt sich die radiale Auslenkung des Werkzeugschafts in weiten Grenzen steuern, so dass auch das radiale Spiel des Schneidkopfs in der Ausnehmung verhältnismäßig grob vorgegeben werden kann. Dadurch wird das Werkzeug billiger. Aber auch die Steuerung der Antriebsvorrichtung, in der das Werkzeug aufgenommen wird, lässt sich dadurch stark vereinfachen, da das Werkzeug verhältnismäßig grob zur Achse der Ausnehmung positioniert werden kann. Das Werkzeug kann dadurch auch in relativ ungenau arbeitende Maschinen eingespannt werden. Es positioniert sich mit seiner am Innenumfang der Ausnehmung schabenden Bewegung selbst. Es wurde festgestellt, dass das erfindungsgemäße Arbeitsprinzip für alle gängigen Werkstoffe, d.h. für Stahl, Grauguss bis hin zu Kunststoffen anwendbar ist.

Grundsätzlich genügt ein einziger Stichkanal, um im Bereich zwischen seiner Mündungsöffnung und der Innenwandung der Ausnehmung eine Druckkraft aufzubauen, die das Werkzeug ausreichend radial auslenkt, damit die Schneidkante wirksam in Eingriff gelangt. Dabei hat sich weiter gezeigt, dass es sogar möglich ist, den Druck des Strömungsmittels derart an den Durchmesser des Stickkanals abzustimmen, dass aus dem Stickkanal ein Strömungsmittelstrahl austritt, der die Funktion eines Schneidstrahls hat, wie er vom sogenannten "Wasserschneiden" her bekannt ist, d.h. mit dem eine spanabhebende Bearbeitung vorgenommen werden kann. Mit anderen Worten, der aus der Mündungsöffnung austretende Strahl kann unabhängig von der Auslenkfunktion für den Werkzeugschaft zum Entgraten herangezogen werden, und zwar schon dann, wenn Schmiermitteldrücke im heutzutage üblichen Bereich von 30 bar aufwärts angewendet werden.

Gemäß einer weiteren Alternative wird die in das Werkzeug integrierte Radialkraft-Erzeugungseinrichtung von einer Unwuchtmasse gebildet, so dass die Unwucht des Werkzeugs, nämlich vorzugsweise die Unwucht im Bereich oder in der Nähe des Schneidkopfs zur gesteuerten radialen Auslenkung des Schneidkopfs herangezogen werden kann. Über die drehzahl lässt sich auf einfache Weise das Absolutmaß der radialen Auslenkung steuern, wodurch es möglich wird, den Schneidkopf beispielsweise bei relativ kleiner Drehzahl in die Ausnehmung oder Bohrung einzuführen und anschließend die Drehzahl ausreichend weit an zu heben, damit die gewünschte Entgratbewegung der zumindest einen Werkzeugschneide hervorgerufen wird.

Eine besonders effektive Art der Bearbeitung ergibt sich mit der Weiterbildung des Anspruchs 4. Denn über die Vielzahl der Stichkanäle lässt sich eine wirkungsvollere und schnellere Bearbeitung vornehmen. Diese Modifikation erlaubt ferner die Anbringung mehrerer Schneidkanten am Schneidkopf, so dass die erforderliche Bearbeitungszeit weiter herabgesetzt werden kann.

Wenn mehrere Stichkanäle vorgesehen sind, deren Mündungsöffnungen in axialer Richtung gestaffelt sind, kann der oben angesprochene "Schneidstrahleffekt" über eine vergrößerte axiale Länge genutzt werden, was der Reduzierung der Bearbeitungsdauer weiter förderlich ist.

Es hat sich gezeigt, dass besonders vorteilhafte Ergebnisse mit Abmessungen des Stichkanals gemäß Anspruch 6 erzielt werden können, d.h. wenn der Durchmesser der stichkanäle im Bereich von 0,1 bis 5 mm liegt.

Über die Länge des Schafts lässt sich die radiale Flexibilität des Werkzeugs leicht steuern, wobei sich der vorteilhafte Nebeneffekt ergibt, dass ein langer Schaft dazu führt, dass das Werkzeug universeller eingesetzt werden kann, d.h. zum Entgraten von Bohrungen, die verhältnismäßig weit im Inneren der Ausnehmung münden. Das Einsatzgebiet liegt vorzugsweise bei Schaftlängen im Bereich von 5 bis 1000 mm.

Wenn, entsprechend Anspruch 7, mehrere innenliegende Strömungsmittelkanäle vorgesehen sind, ergeben sich mehr Möglichkeiten der Anordnung der Mündungsöffnungen an der Außenumfangsfläche des Schneidkopfs.

Die Mündungsöffnungen können im Bereich einer Schneidkante liegen, so dass der Raum zwischen Mündungsöffnung und Innenwandung der Ausnehmung so klein wie möglich wird. Es zeigt sich aber, dass die Mündungsöffnungen auch im Bereich eines Nutgrundes zwischen zwei benachbarten Schneidkanten liegen kann, wenn der Strömungsmitteldruck ausreichend hoch gewählt wird, um eine genügend große Staudruckkraft zu erzeugen.

Der Stichkanal kann grundsätzlich beliebig ausgerichtet sein und auch gekrümmt, beispielsweise wendelförmig verlaufen. Vorzugsweise wird der zumindest eine Stickkanal geradlinig ausgebildet, wobei er entweder von einer Bohrung oder von einer erodierten Ausnehmung gebildet sein kann. Im letzteren Fall verbleibt eine größere Flexibilität bei der Gestaltung des Kanalquerschnitts.

Wenn der Winkel des Stickkanals zur Achse des Werkzeugs im Bereich von 5 bis 175, bevorzugt zwischen 25 bis 155 °, besonders vorzugsweise zwischen 40 und 50 ° gewählt wird, bleiben die Strömungsverluste beherrschbar.

Wenn die zumindest eine Schneidkante zu einer Axialebene des Werkzeugs unter einem Winkel angestellt ist, kann auf die Schnittbedingungen beim Entgraten gezielt Einfluss genommen werden, wodurch die Arbeitsgenauigkeit verbessert wird.

Gute Ergebnisse konnten mit einem radialen Spiel zwischen Schneidkopf und Innenwandung der Ausnehmung im Bereich zwischen 0,1 und 0,5 mm erzielt werden, wobei dieses Spiel an die Höhe des Arbeitsdrucks des Strömungsmittels gekoppelt ist. Es können auch Werte für das Spile bis 5 mm beherrscht werden.

Eine weitere Möglichkeit der Beeinflussung der radialen Auslenkung besteht in der Optimierung der Geometrie des Werkzeug-Schafts. Mit der Weiterbildung nach Anspruch 23 lässt sich die erforderliche radiale Flexibilität des Schafts weiter verbessern.

Mit der Weiterbildung des Anspruchs 24 wird das Einführen des Werkzeugs weiter vereinfacht. Wenn eine Art Anschnitt auf beiden Seiten des Schneidkopfs ausgebildet ist, kann das Werkzeug auch zum Entgraten des inneninliegenden Austritts einer Bohrung genutzt werden, in die das Werkzeug eingeführt wird. Die Taumelbewegung des Schneidkopfs schabt dabei wiederum allmählich den Bohrungsgrat ab, und zwar mit der dem Schaft zugewandten Rundung des Schneidkopfs.

Für die Materialwahl des Werkzeugs gibt es praktisch keine Einschränkungen. Das Werkzeug kann entweder insgesamt oder aber zumindest im Bereich des Schneidkopfs aus einem hochfesten Werkstoff, wie z.B. verschleißfesten Stahl, Schnellstahl (HSS, HSSE, HSSEBM), Hartmetall, Keramok oder Cermet hergestellt sein, wobei auch geeignete Beschichtungen, insbesondere in der Ausgestaltung nach den Ansprüchen 34 bis 36 Anwendung finden können.

Mit der Weiterbildung nach Anspruch 27 wird das Werkzeug zu einer leicht handhabbaren Einheit, die in gängige Werkzeugaufnahmen einsetzbar ist.

Gemäß Anspruch 12 ergibt sich der besondere Vorteil, dass im Werkzeug mit einfachen Mitteln die Schnittstelle zum Strömungsmittelanschluss hergestellt ist.

Eine besonders einfache und kostengünstige Variante ist Gegenstand des Anspruchs 13, wonach der Befestigungs- und Fixierungskörper gleichzeitig den Körper zur Einspeisung des Strömungsmittels bildet. Dieser Körper hat vorzugsweise die Gestalt eines einfachen länglichen Hohlzylinders, der mit dem Schaft des Werkzeugs sogar verklebt werden kann. Mit einer geeigneten korrosionsbeständigen Beschichtung versehen, kann dieser Körper aus gewöhnlichem Stahl hergestellt werden, weil die Fixierung in der Werkzeugaufnahme dadurch erfolgen kann, dass der zylindrische Körper mittels des auf der Rückseite einwirkenden Strömungsmitteldrucks gegen eine Schulterfläche in der Werkzeugaufnahme gedrückt wird.

Das Werkzeug kann als Fräs-, Bohr-, insbesondere Tieflochbohr-, geradegenutetes Bohr- oder Spiralbohrwerkzeug oder als Reibahle ausgebildet werden.

Wenn der Spanwinkel bzw.- bei der Ausbildung als Fräs-oder Reibwerkzeug - der Rückspanwinkel positiv, beispielsweise in einem Größenbereich von 0 bis 10°, vorzugsweise bis 5° gehalten wird, kann die Schneidkante die spanabhebende Wirkung bereits bei relativ geringen Radial-Druckkräften entfalten, so dass der Strömungsmitteldruck kleiner gehalten werden kann.

Mit der Ausgestaltung nach Anspruch 30 ergibt sich eine eher schabende Wirkung der zumindest einen Schneidkante. Die Schneidkanten erhalten eher das Profil einer Feile, mit der Folge, dass mit einem im Vergleich zur Ausführung nach Anspruch 29 höheren Strömungsmitteldruck gearbeitet werden sollte.

Wenn mehrere Mündungsöffnungen vorgesehen sind, so liegen diese vorzugsweise - nach Anspruch 14 - in einem Umfangsbereich, der von einem Zentriwinkel bis zu 180°, vorzugsweise bis zu 120° begrenzt wird. Es ist in diesem Fall von Vorteil, die Mündungsöffnungen über diesen Winkelbereich gleichmäßig zu verteilen. Wenn beispielsweise 2 Mündungsöffungen oder 2 Reihen von Mündungsöffnungen vorhanden sind, beträgt der Winkelabstand der Mündungsöffungen bzw. der Mündungsöffung-Reihen 120°. Bei drei Mündungsöffungen ist der Wnkelabstand auf 60° verkleinert, bei 4 Mündungsöffungen auf 40° und bei 5 Mündungsöffungen auf 30°.

Wenn die zumindest eine Schneidkante im Wesentlichen wendelförmig verläuft, ergibt sich eine für das Entfernen des Gratspans besonders günstige Schneidengestaltung. In diesem Fall ist es von Vorteil, bei mehreren Mündungsöffnungen, diese ebenfalls auf einer im Wesentlichen wendelförmigen Linie bzw. - wenn man eine Verjüngung des Schneidkopfs in axialer Richtung berücksichtigt - spiralförmigen Linie anzuordnen.

Die Weiterbildung des Werkzeugs gemäß Anspruch 32 hat insbesondere dann Vorteile, wenn der Schaft des Werkzeugs extrem dünn ausgeführt ist, beispielsweise für den Fall, dass der Entgratungsvorgang im Bereich einer Bohrung durchgeführt werden soll, die einen Durchmesser von unter 1 mm hat und sich an eine verhältnismäßig tiefe Bohrung ebenfalls kleinen Durchmessers - von beispielsweise bis zu etwa 4 mm anschließt. Die Materialwahl stellt sicher, dass das Werkzeug auch mit einer derart dünnen Schaftgestaltung ausreichend stabil bleibt, um den Schneidkopf auch nach wiederholter Benutzung exakt zu zentrieren. Die Bearbeitungsgenauigkeit wird dadurch besonders gut steuerbar. Der Schneidjopf selbst kann dann aus anderen Materialien gefertigt und beispielsweise lösbar am Schaft des Werkzeugs befestigt sein.

Eine vorteilhafte Ausgestaltung der Vorrichtung zum Entgraten von Bohrungen, die seitlich in eine im wesentlichen zylindrische Ausnehmung münden, ist Gegenstand des Anspruchs 36. Die Drehantriebsvorrichtung kann von einer einfachen Dreh- oder Bohrmaschine oder einem Roboter gebildet sein. In beiden Fällen genügen verhältnismäßig ungenau arbeitende Maschinen.

Es hat sich gezeigt, dass das Strömungsmittel selbst von einem gasförmigen Medium, wie z.B. Luft gebildet sein kann, um die erforderlichen Kräfte zur Auslenkung des Werkzeugschafts zu erzeugen. Selbstverständlich können alle gängigen Kühl- und Schmiermittel zum Einsatz kommen, auch solche der Mindermengenschmierung.

Vorzugsweise arbeitet die Vorrichtung mit einem Strömungsmitteldruck in einem Bereich von 3 bis 3000 bar.

Wenn das Werkzeug einen Befestigungs- und Fixierungskörper gemäß Anspruch 27 hat, ist es vorteilhaft, wenn dieser nach Art eines Bajonettverschlusses in der Werkzeugaufnahme aufgenommen ist.

Ein besonderer Aspekt der vorliegenden Erfindung besteht darin, dass der - verhältnismäßig hohe - Strömungsmitteldruck - gemäß Anspruch 39 - dazu herangezogen wird, das Werkzeug in der Werkzeugaufnahme axial und in Umfangsrichtung zu fixieren. Es hat sich nämlich gezeigt, dass die Schnittkräfte beim Entgraten mit Leichtigkeit durch die Reibkraft aufgenommen werden kann, die entsteht, wenn der Befestigungs- und Fixierungskörper vom Strömungsmitteldruck gegen eine Halteschulter gedrückt wird. Dies wird dadurch noch erleichtert, dass der Befestigungs- und Fixierungskörper einen größeren Durchmesser als der Schneidkopf erhalten kann.

Mit der Weiterbildung nach Anspruch 41 ergibt sich eine mit einfachen Bauelementen eine wirksame Schnell-Spannvorrichtung für das Werkzeug.

Die wesentlichen Elemente des erfindungsgemäßen Verfahrens zum Entgraten von Bohrungen, beispielsweise von Bohrungen, die seitlich in eine im wesentlichen zylindrische Ausnehmung münden, sind Gegenstand des Anspruchs 42. Das Grundprinzip besteht darin, dass der Strömungsmitteldruck des durch das in die Ausnehmung eingeführten Werkzeugs dazu genutzt wird, den Schneidkopf radial auszulenken und dadurch die zumindest eine Schneidkante in Eingriff mit dem zu entfernenden Span gelangen zu lassen.

Weitere vorteilhafte Ausgestaltungen sind Gegenstand der übrigen Unteransprüche.

Zwar ist es aus dem Dokument DE_AS 1 167 302 bekannt, die Schneide eines Stahlhalters durch ein Flüssigkeits-oder Luftpolster abzustützen, das der Schneide gegenüberliegt. Allerdings dient die Schneide zum Entfernen des Innengrats längsnahtgeschweißter Rohre, so dass bei der Bearbeitung eine Veränderung der Relativ-Drehlage zwischen Stahlhalter und Rohr verhindert werden muß.

Nachstehend werden anhand schematischer Zeichnungen mehrere Ausführungsbeispiele der Erfindung näher erläutert. Es zeigen:
Figur 1 eine schematische Seitenansicht eines erfindungsgemäßen Werkzeugs nach einer ersten Ausführungsform;
Figur 2 die Einzelheit "II" in Figur 1;
Figur 3 einen schematischen Schnitt III-III in Figur 2;
Figur 4 eine schematische Seitenansicht einer weiteren Ausführungsform des erfindungsgemäßen Werkzeugs;
Figur 5 die Ansicht "V" in Figur 4;
Figur 6 eine schematische Teil-Ansicht einer Variante des Werkzeugs nach Figur 1 mit angedeuteter Aufnahme und Fixierung in einer Werkzeugaufnahme;
Figur 7 die Ansicht "VII" in Figur 6;
Figur 8 eine schematische Darstellung der Positionen des erfindungsgemäßen Werkzeugs vor und während des Bearbeitungseingriffs;
Figur 9 und 10 Varianten der Gestaltung des Schneidkopfs;
Figur 11 in stark vergrößerter Darstellung die schematische Seitenansicht einer weiteren Ausführungsform des Entgratwerkzeugs;
Figur 12 in etwas vergrößerter Darstellung den Schneidkopf des Werkzeugs nach Figur 11;
Figur 13 in vergrößerter Darstellung den Schnitt gemäß XIII-XIII in Figur 12;
Figur 14 in etwas vergrößertem Maßstab die schematische Seitenansicht einer weiteren Ausführungsform des Entgratwerkzeugs;
Figur 15 in vergrößerter Darstellung den Schneidkopf des Werkzeugs nach Figur 14;
Figur 16 eine Teilschnittansicht gemäß XVI-XVI in Figur 15;
Figur 17 eine schematische Schnittansicht des Schneidkopfs nach Figur 15 zur Veranschaulichung der Lage der darin vorgesehenen Stichkanäle;
Figur 18 in einer der Figur 8 ähnlichen Darstellung eine schematische Ansicht einer weiteren Ausführungsform der Erfindung;
Figur 19 eine der Figur 18 ähnliche Darstellung einer weiteren Ausführungsform der Erfindung;
Figur 20 die schematische Ansicht einer Bohrung, die mit einem besonders gestalteten erfindungsgemäßen Werkzeug an besonders unzugänglichen Stellen entgratet werden soll;
Figur 21 die Darstellung der Einzelheit "XXI" in Figur 20; und
Figur 22 in einem im Vergleich zur Figur 21 etwas verkleinertem Maßstab die Ansicht eines Werkzeugs, mit dem die Bearbeitungsaufgabe gemaäß Figur 20, 21 gelöst werden kann.

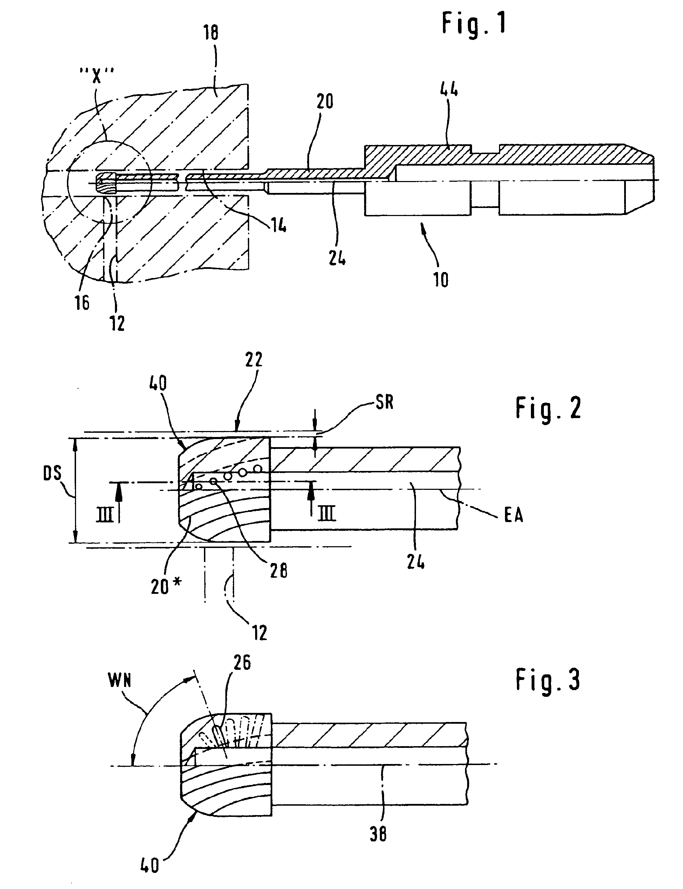

In Figur 1 ist mit dem Bezugszeichen 10 ein drehangetriebens, vorzugsweise rotationssymmetrisches Nachbearbeitungswerkzeug in der Ausgestaltung als Entgratwerkzeug bezeichnet, mit dem es möglich ist, auf besonders wirtschaftliche Weise und möglichst zuverlässig Bohrungen 12, die seitlich in eine im wesentlichen zylindrische Ausnehmung 14 in einem Werkstück 18 münden, an ihren radial inneren Enden 16 zu entgraten. Es soll jedoch an dieser Stelle bereits hervorgehoben werden, dass das Werkzeug auch statisch sein kann und statt dessen oder zusätzlich das Werkstück in eine Drehbewegung versetzt wird. Außerdem kann das Werkzeug auch zum Entgraten der Mündungsöffnungen der Ausnehmung 14 herangezogen werden.

Das Werkzeug ist beispielsweise als Fräs-, Bohr-, insbesondere Tieflochbohr-, geradegenutetes Bohr- oder Spiralbohrwerkzeug oder als Reibahle ausgebildet. Entscheidend ist, dass es zumindest eine Schneidkante 20* hat, die eine spanabhebende Bearbeitung durchführen kann.

Bei dem Werkzeug sitzt an einem Schaft 20 ein Schneidkopf 22, der eine Vielzahl von Schneidkanten 20* hat, die sich zumindest abschnittsweise in axialer Richtung erstrecken, wie aus den Figuren 2 und 3 ersichtlich.

Das Werkzeug hat einen innenliegenden Strömungsmittelkanal 24, von dem im Bereich des Schneidkopfs mehrere Stickkanäle 26 ausgehen. Diese Stichkanäle, sind so angeordnet, dass sie mit Mündungsöfnungen 28 im Bereich des Schneidkopfs 22 in dessen äußere Umfangsfläche münden. Wie aus der Figur 2 ersichtlich sind die Schneidkanten über den gesamten Umfang verteilt, so dass die Mündungsöffnungen 28 im Umfangsabstand zu zumindest einer Schneidkante 20*, beispielsweise der diametral gegenüberliegenden Schneidkante stehen. Man erkennt ferner aus den Figuren 1 bis 3, dass der Durchmesser DS des Schneidkopfs 22 so gewählt ist, dass er mit radialem Spiel SR in die Ausnehmung 14 einführbar ist. Das radiale Spiel beträgt vorzugsweise bis zu einigen 1/10 mm und liegt z.B. im Bereich zwischen 0,1 und 5 mm.

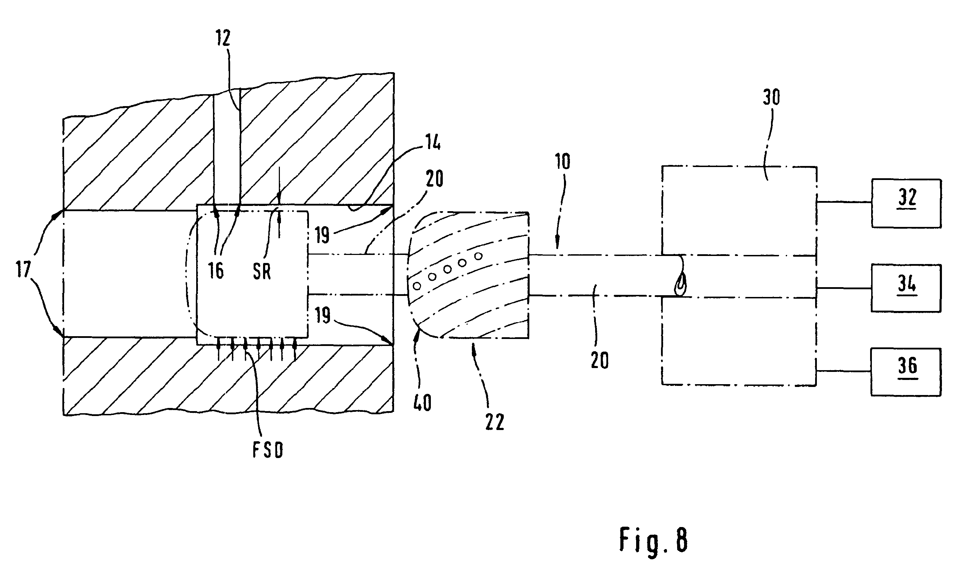

Mit diesem Aufbau des Werkzeugs lässt sich folgendes Arbeitsprinzip mit den nachfolgend anhand der Figur 8 beschriebenen Effekten verwirklichen:

Das Werkzeug 10 ist zur Realisierung des Drehantriebs in einer Werkzeugaufnahme 30 dreh- und verschiebefest aufgenommen. Der Werkzeugaufnahme ist ein Drehantrieb 32, ein Vorschubantrieb 34 und eine Strömungsmitteldruckquelle 36 zugeordnet. Der Vorschub und oder der Drehantrieb kann auch für das Werkstück 18 vorgesehen sein. Für das Werkstück 18 kann auch ein zusätzlicher Drehantrieb und/oder Vorschub vorgesehen sein.

Wenn die Radialbohrung 12 im radial inneren Mündungsbereich entgratet werden soll, wird das Werkzeug 10 zunächst an die Ausnehmung 14 herangefahren (strichpunktiert dargestellte Stellung). Aufgrund des radialen Spiels SR kann die Positionierung relativ ungenau erfolgen, was den Einsatz von relativ ungenauen Maschinen erlaubt.

Anschließend wird der Drehantrieb und der Vorschub betätigt, so dass das Werkzeug in die Ausnehmung so weit eingefahren wird (oder eine entsprechende kinematisch umgekehrte Bewegung), dass die Mündungsstelle 16 erreicht wird. Spätestens dann, wenn die vorderste Schneidkante 20* diese Stelle erreicht (strich-zwei-punktiert dargestellte Lage), wird Strömungsmittel, beispielsweise Wasser oder ein anderes Werkzeug-Kühl- und Schmiermittel, oder aber auch ein gasförmiges Stzrömungsmittel unter verhältnismäßig hohem Druck von 3 bis 3000 bar in den innenliegenden Strömungsmittelkanal 24 eingespeist. Im Bereich der Mündungsöffnungen 28 baut sich somit im Zusammenwirken mit der inneren Umfangswandung der Ausnehmung 14 ein entsprechend großer Staudruck auf, der durch die kleinen Pfeile in Figur 8 angedeutet ist. Zusätzlich wirkt aufgrund des durch die Strömungsmittelumlenkung hervorgerufenen Impulses eine radiale Auslenkungskraft auf den Schneidkopf 22.

Die Vielzahl von Mündungsöffnungen 28 sind über den Umfang derart ungleichmäßig verteilt sind, dass die Summe der im Bereich der Mündungsöffnungen 28 zwischen dem Schneidkopf 22 und der Innenwandung der Ausnehmung 14 erzeugten Staudruckkräfte den Schaft 20 in radialer Richtung auslenken können, so dass die der resultierenden Staudruckkraft gegenüberliegende Schneidkante den zu bearbeitenden Grat an der Stelle 16 berührt und an diesem entlang schneidet bzw. schabt. Mit anderen Worten, das Werkzeug führt in diesem Moment eine der Drehbewegung überlagerte Kreisbewegung mit einem Radius des radialen Spiels SR aus.

Jedesmal, wenn eine Mündungsöffnung 28 die Radialbohrung 12 erreicht und überstreicht, baut sich darüber hinaus ein energiereicher Schneidstrahl auf, der zu einer zusätzlichen spanabhebenden Bearbeitung der kritischen Stelle 16 führt. Der Entgratvorgang wird damit sehr wirkungsvoll durchgeführt.

Wie sich aus den Figur 1 bis 3 ergibt, sind die Stichkanäle 26 so angeordnet, dass ihre Mündungsöffnungen 28 in axialer Richtung gestaffelt sind. Dies ist aber nicht unbedingt erforderlich.

Die Stickkanäle 28 haben beispielsweise einen Durchmesser bzw. eine lichte Weite im Bereich von 0,1 bis 5 mm.

Aus der vorstehenden Beschreibung wird klar, dass die Staudruckkräfte bei den angegebenen Drücken des Strömungsmittels groß genug sind, den flexiblen Schaft 20 ausreichend weit auszulenken. Über die Länge des Schafts, die im Bereich von 5 bis 1000 mm liegen kann, lässt sich die elastische Verformung steuern. Die Figur zeigt, dass der Schaft 20 im Verhältnis zum Durchmesser DS des Schneidkopfs 22 verjüngt ist.

Die Mündungsöffnungen 28 können im Bereich einer Schneidkante 20* und/oder im Bereich eines Nutgrundes zwischen zwei benachbarten Schneidkanten liegen.

Aus der Figur 3 ist ersichtlich, dass die Stickkanäle 26 geradlinig ausgebildet sind. Diese Kanäle können von einer Bohrung oder von einer erodierten Ausnehmung gebildet sein.

Der Winkel WN, um den der Stickkanal 26 zur Achse 38 des Werkzeugs 10 geneigt ist, liegt vorzugsweise im Bereich von 5 bis 175 °, vorzugsweise von 25 bis 155 °, besonders bevorzugt zwischen 40 und 50 °. Es können aber auch andere Winkel verwendet werden.

Auch wenn in der gezeigten Ausführungsform die Schneidkanten 20* zu einer Axialebene EA des Werkzeugs 10 unter einem bestimmten Winkel angestellt sind, so ist dies nicht unbedingt erforderlich.

Wie ferner in den Figuren 1 bis 3 und 8 gezeigt ist, hat der Schneidkopf 22 einen Anschnitt 40, der vorzugsweise von einer Anfasung oder einer Rundung beispielsweise in Kungelform gebildet ist.

Das Werkzeug kann aus verschleißfestem Stahl, Schnellstahl (HSS, HSSE, HSSEBM), Hartmetall, Keramik oder Cermet hergestellt und mit einer geeigneten, üblichen Beschichtung versehen sein.

Mit dem vorstehend beschriebenen Werkzeug können nicht nur die Stellen 16 entgratet werden sondern auch die im Bereich der Bohrung 14 liegenden Stellen 17 und 19.

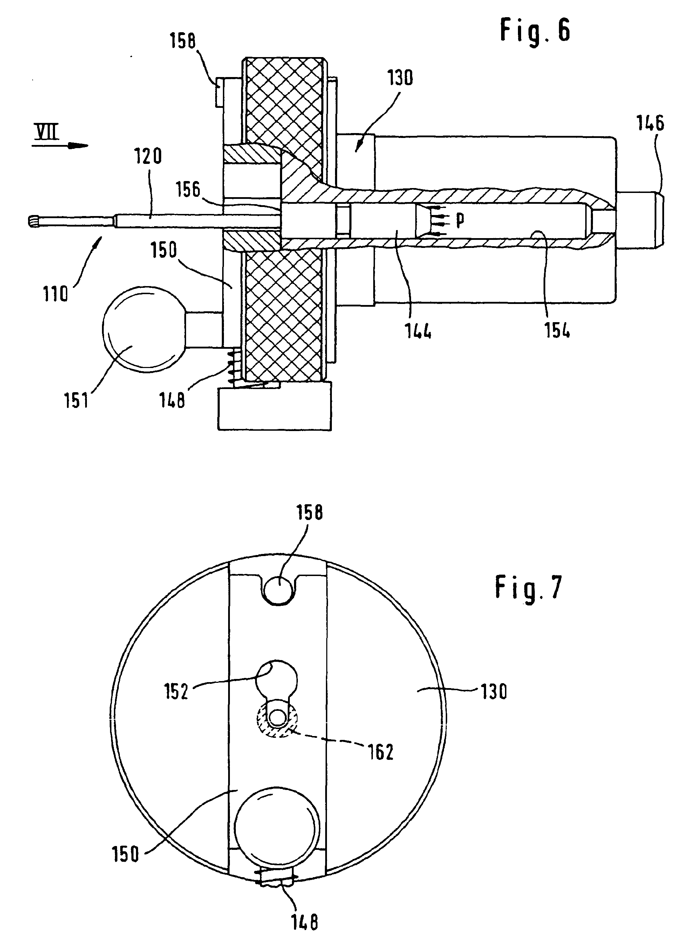

Im folgenden wird beschrieben, wie das Werkzeug in der Werkzeugaufnahme 30 dreh- und verschiebefest fixiert wird. Dazu wird zunächst auf die Figuren 6 und 7 Bezug genommen, in denen eine Variante des Werkzeugs nach Figur 1 bis 3 angedeutet ist. Ein in den Figuren 1 bis 3 mit 44 bezeichnete Befestigungs- und Fixierkörper, der einstückig mit dem Schaft 20 ausgebildet ist, ist bei der Ausführungsform nach Figur 6 als aufgeklebte zylindrische Hülse 144 ausgebildet.Im übrigen entspricht das Werkzeug 110 dem Werkzeug 10. Diejenigen Komponenten der Ausführungsform nach Figur 6, die den Bauteilen des Werkzeugs nach Figur 1 bis 3 entsprechen, sind mit entsprechenden Bezugszeichen versehen, denen eine "1" vorangestellt ist:

Die Hülse 144 besteht aus gewöhnlichem Stahl, der vorzugsweise mit einer Korrosionsschutzbeschichtung versehen ist. Zusätzlich zur Verklebung kann eine nicht dargestellte Madenschraube verwendet werden, die die Hülse 144 mit dem Schaft 120 formschlüssig verbindet.

Mit 146 ist eine Anfasung bezeichnet, über die der fluiddichte Anschluss zur Strömungsmittelquelle erfolgt.

Die Besonderheit der Ausführungsform nach Figur 6 und 7 besteht darin, dass der Strömungsmitteldruck zur Verdrehund axialen Lagesicherung des Werkzeugs in der Aufnahme 130 herangezogen wird.

Zu diesem Zweck kommt eine in der Stirnfläche der Aufnahme 130 radial gegen eine Feder 148 verschiebbare Riegelplatte 150 zur Anwendung, in der eine Schlüssellochöffnung 152 ausgebildet ist. Wenn die Riegelplatte 150 mit Betätigungsknopf 151 gegen die Kraft der Feder 148 in Figur 7 nach unten verschoben wird, kommt die größere Kreisbohrung in der Riegelplatte zur Deckung mit einer zylindrischen Ausnehmung 154 in der Werkzeugaufnahme 130, so dass das Werkzeug von vorne in die Werkzeugaufnahme eingeführt werden kann. Sobald eine Schulter 156 der Hülse 144 hinter die Gleitebene der Riegelplatte 150 gelangt, kann letztere unter Einwirkung der Feder 148 nach oben gleiten, bis sie an einem Stift 158 anschlägt. Der schlitzförmige Abschnitt der Schlüssellochöffnung 152 gleitet dabei am Außenumfang des Schafts 120 entlang. Die Hülse 144 ist damit hinter der Riegelplatte gefangen.

Wenn demnach - wie mit den Pfeilen in Figur 6 angedeutet - der Strömungsmitteldruck auf die Rückseite der Hülse 144 gegeben wird, wird die Hülse mit der schraffiert gekennzeichneten Fläche 162 gegen die Rückseite der Riegelplatte gedrückt. Diese Druckkraft ist ausreichend groß, um eine Verdrehsicherung für das Werkzeug bereit zu stellen, zumal die Schneidkanten des Werkzeugs keine dicken Späne abheben.

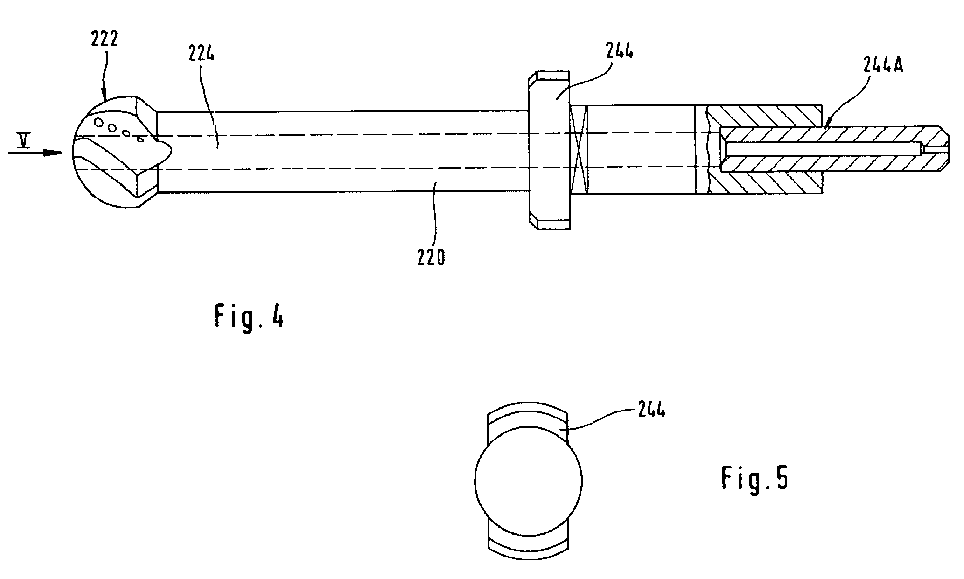

In den Figuren 4 und 5 ist ein weiteres modifiziertes Werkzeug gezeigt, bei dem die axiale und rotatorische Fixierung nach der Art eines Bajonettverschlusses erfolgt. Auch hier sind wieder für vergleichbare Komponenten ähnliche Bezugszeichen verwendet, denen eine "2" vorangestellt ist:

Auch hier trägt der Schaft 220 auf der dem in der Formgebung etwas variierten Schneidkopf 222 abgewandten Seite einen Befestigungs- und Fixierungskörper 244, mit dem das Werkzeug in einer Werkzeugaufnahme dreh- und verschiebefest fixierbar ist. Dieser Körper hat im wesentlichen Rechteckform und wirkt mit einer nicht näher dargestellten hinterschnittenen Ausnehmung in der Werkzeugaufnahme zusammen, die nach der Art eines Bajonettverschlusses aufgebaut ist.

Vorstehend wurde bereits erwähnt, dass der Strömungsmitteldruck in verhältnismäßig hohe Bereiche angehoben werden sollte, um die ausreichende radiale Auslenkung des Werkzeugschafts sicherzustellen. Die Druckerzeugungsvorrichtung sollte in der Lage sein, einen Strömungsmitteldruck in einem Bereich von 30 bis 3000 bar zu erzeugen. Für bestimmte Gestaltungen des Werkzeugschafts und/oder der Spielpassung zwischen Werkzeug und Aufnahme können aber schon Drücke von 3 bar ausreichend sein.

Vorzugsweise wird die Relativ-Drehzahl wischen Werkzeug und Werkstück im Bereich zwischen 100 und 50000 U/min gehalten, wobei die Schnittgeschwindigkeit im Bereich zwischen 20 und 300 m/min gewählt wird.

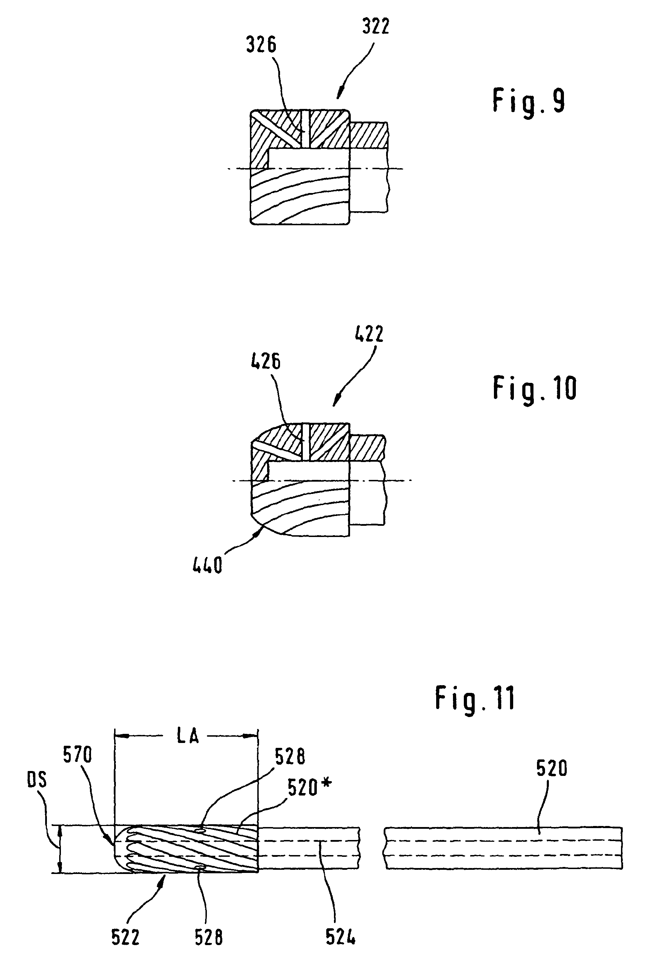

In den Figuren 9 und 10 sind weitere Varianten des Schneidkopfs 322 bzw. 422 gezeigt. Bei der Form nach Figur 9 ist der Querschnitt des Schneidkopfs nahezu rechteckig, während bei der Variante nach Figur 10 eine deutlicher Anschnitt 440 zu erkennen ist. auch die Ausrichtung der Stichkanäle 326, 426 ist in den Figuren 9 und 10 modifiziert.

Der Schneidkopf 222 der Variante nach Figur 4 hat die Form einer Halbkugel, in die die Nuten und Schneidkanten eingearbeitet sind.

Zumindest der Schneidkopf des Werkzeugs bzw. Entgratwerkzeugs ist vorzugsweise aus einem hochfesten Werkstoff gefertigt, wie z.B. aus Hartmetall, Schnellstahl wie HSS, HSSE oder, HSSEBM, Keramik, Cermet oder aus einem anderen Sintermetall-Werkstoff. Es kann zumindest im Bereich der am höchsten beanspruchten Abschnitte, d.h. im Bereich der zumindest einen Schneidkante 20* mit einer Beschichtung versehen sein, die vorzugsweise als Hartstoffschicht ausgebildet ist.

Für diese Hartstoffschicht kommt z.B. Diamant, vorzugsweise nanokristalliner Diamant in Frage, Titan-Nitrid- oder Titan-Aluminium-Nitrid. Besonders geeignet sind u.a. eine Titan-Aluminium-Nitrid-Schicht und eine sogenannte Mehrlagen-Schicht, die unter der Bezeichnung "Fire I" von der Firma Gühring oHG vermarktet wird. Dabei handelt es sich um eine TiN-/(Ti,Al)N-Mehrlagen-Schicht.

Besonders bevorzugt kann auch eine Verschleißschutzschicht zur Anwendung kommen, die im wesentlichen aus Nitriden mit den Metallkomponenten Cr, Ti und Al und vorzugsweise einem geringen Anteil von Elementen zur Kornverfeinerung besteht, wobei der Cr-Anteil bei 30 bis 65 %, vorzugsweise 30 bis 60 %, besonders bevorzugt 40 bis 60 %, der Al-Anteil bei 15 bis 35 %, vorzugsweise 17 bis 25 %, und der Ti-Anteil bei 16 bis 40 %, vorzugsweise 16 bis 35 %, besonders bevorzugt 24 bis 35 %, liegt, und zwar jeweils bezogen auf alle Metallatome in der gesamten Schicht. Dabei kann der Schichtaufbau eilagig sein mit einer homogenen Mischphase oder er kann aus mehreren in sich homogenen Lagen bestehen, die abwechselnd einerseits aus (TiₓAl_{y}Y_{z})N mit x = 0,38 bis 0,5 und y = 0,48 bis 0,6 und z = 0 bis 0,04 und andererseits aus CrN bestehen, wobei vorzugsweise die oberste Lage der Verschleißschutzschicht von der CrN-Schicht gebildet ist.

Weitere Ausführungsformen sind in den Figuren 11 bis 17 beschrieben, wobei für diese Ausführungsformen die vorstehend beschriebenen Gestaltungsgrundsätze insbesondere hinsichtlich Werkzeughalterung, Material und Beschichtung gleichermaßen gelten. Zur Vereinfachung der Beschreibung sind bei den Ausführungsformen nach den Figuren 11 bis 13 und 14 bis 17 für Elemente, die den Komponenten der zuvor beschriebenen Ausführungsformen entsprechen, ähnliche Bezugszeichen zugeordnet, denen aber eine "5" bzw. eine "6" vorangestellt ist.

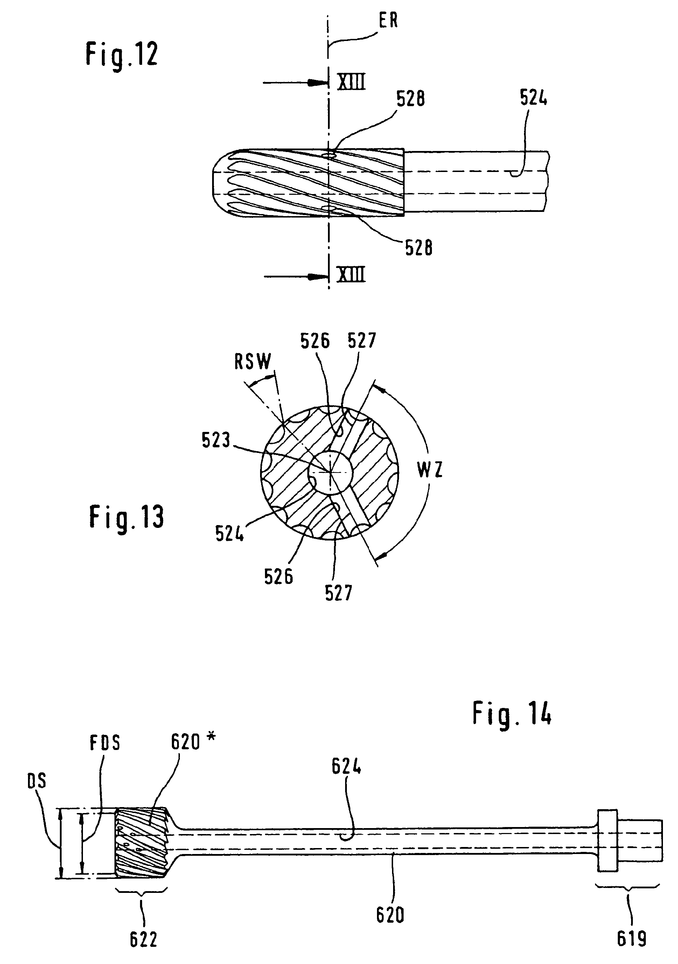

Figur 14 zeigt einen im Wesentlichen zylindrisch ausgebildeten Werkzeugkörper, der in einen nicht näher gezeigten Werkzeughalter eingesetzt und mit diesem drehund verschiebefest verbunden, beispielsweise verlötet ist. Der Werkzeughalter kann jede gängige Formgebung haben.

Gemäß Figur 14 sitzt an einem zylindrischen Schaft 520, beispielsweise mit einem Durchmesser von 1,6 mm ein Schneidkopf 522, der einen Außendurchmesser DS von 1,8 mm hat. Das Werkzeug dient dann zum Entgraten einer Ausnehmung oder einer Bohrung, die in eine Bohrung mit einem Innendurchmesser von 2 mm mündet.

Ein zentrischer Strömungsmittelkanal 524 erstreckt sich durch den gesamten Werkzeugkörper und ist strinseitig bei 570 verschlossen. Der Schneidkopf 522 mit einer axialen Länge LA von beispielsweise 5 mm ist als Reibwerkzeug gestaltet und hat eine Viekzahl - nämlich 14 - von wendelförmig verlaufenden Schneidkanten 520*. Im Abstand von beispielsweise 3 mm von der Schneidkopfspitze sind zwei Mündungsöffungen 528 von Stichkanälen 526 vorhanden, die so verlaufen, dass ihre Achsen 527 in einer gemeinsamen Radialebene ER liegen (vgl. Figur 12 und 13). Der Durchmesser der Stichkanäle beträgt beispielsweise 0,3 mm. Der Zentriwinkel WZ, der von den Ebenen aufgespannt wird, die die Mittelachse 523 des Strömungsmittelkanals 524 und die Achsen 527 der Stichkanäle 526 enthalten, ist kleiner als 180°, beispielsweise etwa 130°. Für den Fall, dass weitere Stichkanäle vorgesehen sind, so werden diese vorzugsweise so verteilt, dass der Zentriwinkel WZ zwischen den äußersten Stichkanälen von den durch die Achsen der weiteren Stichkanäle verlaufenden Radialebenen durch die Achse des Strömungsmittelkanals in gleich große Teilwinkel unterteilt wird.

Selbstverständlich ist es nicht erforderlich, dass die Achsen 527 der Stichkanäle 526 auf der Mittelschse des Strömungsmittelkanals senkrecht stehen. Es ist beispielsweise bei dem Werkzeug nach Figur 11 bis 13 als vorteilhaft festgestellt worden, wenn die Achsen 527 zur Mittelachse 523 unter einem spitzen Winkel von beispielsweise 60° geneigt verlaufen, und zwar derart, dass die Mündungsöffungen 528 näher zur Spitze des Werkzeugs liegen als die Stellen, an denen die Stichkanäle 526 von dem Strömungsmittelkanal 524 abzweigen.

Man erkennt aus der Dartellung nach Figur 11 bis 13, dass die Mündungsöffungen 528 in Umfangsrichtung versetzt zu den Schneidkanten 520*, das heißt in einem Nutgrund zwischen benachbarten Schneidkanten liegen. Die Lage der Mündungsöffungen kann aber in weiten Grenzen variieren.

Das Werkzeug nach Figur 11 bis 13 hat eine Schneidkantengestaltung derart, dass an der Schneidkante 520* ein negativer Spanwinkel bzw. Rückspanwinkel RSW ausgebildet wird. Damit wird der Schneidkante 520* eine eher schabende Funktion übertragen, mit der Folge, dass es zum Abtragen eines Restspans an der zu entgratenden Bohrung 12 von Vorteil ist, die radial nach außen gerichtete Andruckkraft des Werkzeugs an die Innenoberfläche der Ausnehmung 14 relativ groß zu halten, d.h. den Strömungsmitteldruck zu verstärken oder den Schaft des Werkzeugs weicher bzw. nachgiebiger zu machen.

In den Figuren 14 bis 17 ist eine weitere Variante eines erfindungsgemäßen Werkzeugs gezeigt. Dieses Entgratwerkzeug ist im Unterschied zum Werkzeug nach Figur 11 bis 13 für Bohrungen wesentlich größerer Innendurchmesser konzipert, beispielsweise für einen Durchmesser der Ausnehmung 14 von 14 mm. Der von einem zylindrischen Schaft 620 getragene, beispielsweise einstückig angeformte Schneidkopf 622 hat in diesem Fall einen Außendurchmesser DS von 13,75 mm, so dass auch in diesem Fall ein beim Einführen des Werkzeugs in die Ausnehmung 14 ein radiales Spiel von maximal etwa 0,25 mm verbleibt. Der Durchmesser des Schafts 620 beträgt beispielsweise lediglich etwa 5 mm. Der Schaft ist somit erheblich gegenüber dem Schneidkopf 622 verjüngt. Mit 619 ist ein Abschnitt bezeichnet, über den der Schaft 620 an einem Werkzeughalter (nicht gezeigt) befestigt werden kann.

Der Schneidkopf 622 hat 16 wendelformig verlaufende Schneidkanten 620*, zwischen denen ebenso viele Spannuten 631 verbleiben. Der Schneidkanten-Fußdurchmesser FDS liegt beispielsweise bei etwa 12 mm.

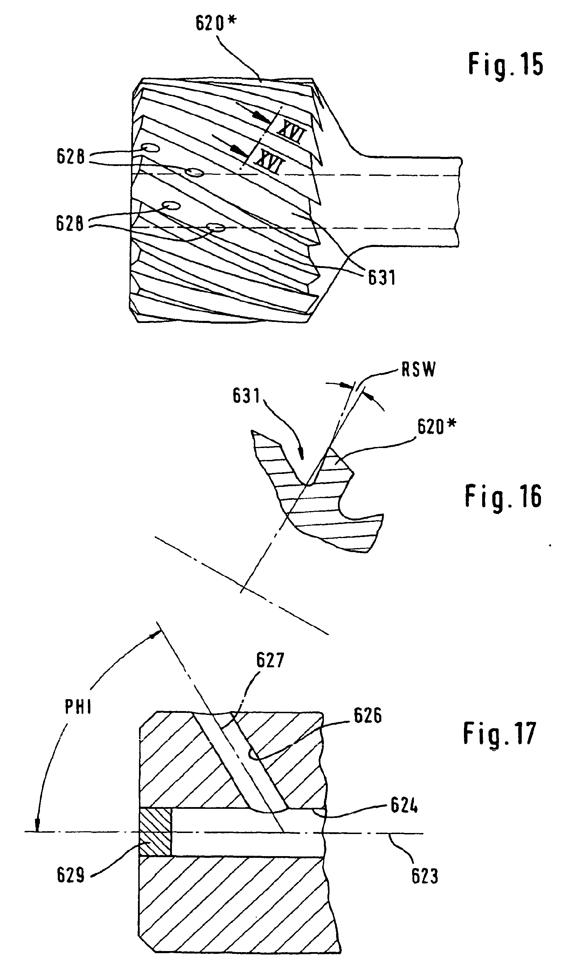

Wie sich aus Figur 14 und 17 ergibt, ist wiederum ein zentrischer Strömungsmittelkanal 624 vorgesehen, der im Bereich des Schneidkopfs 622 durch einen beispielsweise eingelöteten Körper 629 stirnseitig verschlossen ist.

Vom Strömungsmittelkanal 624 gehen - wie in Figur 15 am besten zu erkennen - 4 Stichkanäle aus, deren Mündungsöffungen 628 im Bereich der Nutwandungen 631 liegen. Der Durchmesser der Stichkanäle liegt beispielsweise bei etwa 0,8 mm. Im gezeigten Ausführungsbeispiel münden die Stichkanäle paarweise in zwei benachbarte Nuten, und zwar derart, dass die Mündungsöffungen einer Nut auf einer zur Nut parallel verlaufenden Wendel liegen. Es ist aber - wie sich aus der vorstehenden Beschreibung bereits ergibt - nicht erforderlich, die Mündungsöffungen derart eng zu konzentrieren. Sie können ebenfalls über einen weitaus größeren Zentriwinkel verteilt werden, wobei lediglich die Kriterien des Anspruchs 2 erfüllt sein müssen.

Wie sich aus Figur 17 ergibt, sind die Stichkanäle 626 mit ihrer Achse 627 unter einem spitzen Winkel PHI zur Mittelachse 623 des Strömungsmittelkanals 624 geneigt. Diese Winkel beträgt beispielsweise für jeden Stichkanal etwa 60°. Eine weitere Besonderheit der Ausführungsform nach Figur 14 bis 17 besteht darin, dass die Schneidkanten 620* besonders gestaltet sind, und zwar derart, dass - wie aus Figur 16 im einzelnen ersichtlich - an der Schneidkante 620* ein positiver Spanwinkel bzw. Rückspanwinkel RSW entsteht. Dieser beträgt beim Ausführungsbeispiel beispielsweise 3°. Damit wird die Schneidkante 620* zu einer scharfen Schneide, die es ermöglicht, den Restspan nicht schabend, sondern schneidend abzutragen. Der radial nach außen auf die Innenwandung der Ausnehmung 14 gerichtete Andruck des Schneidkopfs kann damit mit diesem Werkzeug kleiner gehalten werden.

Die Wirkungsweise der Werkzeuge nach den Figuren 11 bis 17 entspricht grundsätzlich derjenigen der anderen beschriebenen Ausführungsformen. Es soll aber an dieser Stelle hervorgehoben werden, dass eine Variation der Einsatzmöglichkeiten der beschriebenen Werkzeuge noch darin besteht, dass durch gezieltes Positionieren der Mittelachse 523 bzw 623 des Werkzeugs zum Zentrum der Ausnehmung 14, in die das Werkzeug eingeführt wird, der Entgratvorgang optimiert werden kann. Wenn die Mittelschse 523, 623 exakt mit dem Zentrum der Ausnehemung in fluchtung gebracht wird, wird der Schneidkopf eine gleichmäßige Bearbeitung der Innenoberfläche der Ausnehmung vornehmen. Durch gezieltes Außermitte-Fahren des Schneidkopfs, vorzugsweise derart, dass die radiale Außermitteposition auf die Lage der zu entgratenden Mündungsstelle 16 abgestimmt ist, kann dem Schneidkopf - wenn er in die Ausnehmung eingefahren ist - bei Druckbeaufschlagung mit dem Strömungsmittel eine Bewegung aufgezwungen werden, die dazu führt, dass der Anpressdruck der zumindest einen Schneidkante im Bereich der zu entgratenden Mündungsstelle 16 zu Lasten des Anpressdrucks im übrigen Bereich der Innenoberfläche der Ausnehmung 14 verstärkt wird. Die Entgratfunktion kann auf diese Weise gezielt effizienter gemacht werden, insbeondere dann, wenn nur eine zu entgratende Mündungsstelle 16 vorliegt oder mehrere Mündungsstellen winkelmäßig verhältnismäßig nahe beieinander liegen.

Vorstehend wurden Ausführungsformen beschrieben, bei denen der hydrostatische Staudruck eines im Inneren des Werkzeugs zugeführten Strömungsmittels dazu genutzt wird, eine in das Werkzeug integrierte Radialkraft-Erzeugungseinrichtung bereit zu stellen, mit der der Schneidkopf, dessen Durchmesser so gewählt ist, dass er mit radialem Spiel entweder in die Ausnehmung oder in die Bohrung einführbar ist, bei seiner Drehbewegung vorzugsweise gesteuert radial auslenkbar ist. Diese Variante setzt voraus, dass der Austritt des Strömungsmittels im Bereich einer Innenwand und zwar derart erfolgt, dass die Innenwand der Mündung gegenüberliegt. Mit anderen Worten, der Schneidkopf der Ausführungsformen nach den Figuren 1 bis 17 kann nur so lange ausreichend weit ausgelenkt werden, als zumindest eine Austrittsöffnung 28 noch innerhalb der Ausnehmung 14 zu liegen kommt.

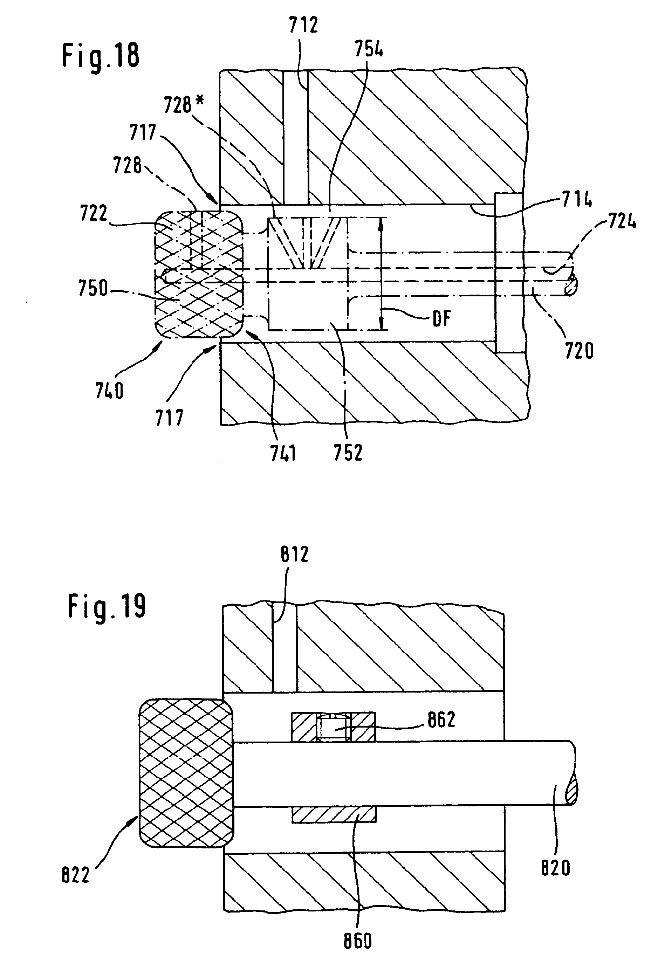

Um die gesamte axiale Länge des Schneidkopfs und sogar den Bereich eines Übergangs zum Schaft für einen Entgratvorgang nutzen zu können, dient die Weiterbildung der Figur 18:

Mit dieser Weiterbildung soll insbesondere das Entgraten der Stellen 717 der Bohrung 714 vereinfacht werden, indem ein rückwärtiger Anschnitt bzw. Rundungsübergang 741 des Schneidkopfs 722 genutzt wird. Der Schneidkopf 722 selbst kann hinsichtlich Geometrie, Material und Eigenschaften in gleicher Weise wie vorstehend beschrieben bzw. in den Ansprüchen umrissen ausgebildet werden, so dass darauf hier nicht näher eingegangen wird. Wie schematisch angedeutet, können die zum Entgraten vorgesehenen Schneidkanten durch eine sogenannte BIAX-Riffelung 750 gebildet sein. Es sind aber auch andere Geometrien der Schneidkanten gleichermaßen möglich.

Damit eine hydrostatische Auslenkkraft auch dann erzeugbar ist, wenn der Schneidkopf 722 die Bohrung 714 weitgehend verlassen hat, trägt der Schaft 720 im Axialabstand zum Schneidkopf einen Führungs- und Stützkörper 752, der einen Durchmesser DF hat, welcher derart an den Innendurchmesser der Bohrung 714 angepasst ist, dass ein Funktionsspalt 754 vorbestimmter Weite ausgebildet wird. Dieser Funktionsspalt kann über den Umfang variieren; entscheidend ist das Maß im Bereich der Mündungsöffnungen 728*. Man erkennt aus der Darstellung der Figur 18, dass über die Mündungsöffnungen 728* auch dann der erforderliche Staudruck aufgebaut werden kann, wenn der Schneidkopf 722, in dem nach wie vor auch ein Radialkanalsystem 728 ausgebildet sein kann, das mit Doppelstrich-punktierter Linie angedeutet ist, die Bohrung 714 verlassen hat. In der in Figur 18 gezeigten Stellung kann der Rundungsabschnitt 741 bei Fluiddruckbeaufschlagung des Innenkanals 724 wirksam auch zur Entgratung des Bereichs 717 herangezogen werden, wobei es von Vorteil sein kann, das Werzeug in diesem Moment einem leichten axialen Zug zu unterwerfen.

Die vortehend beschriebenen Varianten integrieren die Radialkraft-Erzeugungseinrichtung in Form eines innenliegenden Druckfluid-Kanalsystems in das Werkzeug. Eine Alternative ist in Figur 19 gezeigt.

Hier wird die gesteuerte radiale Auslenkung des Schneidkopfs durch eine dynamische Kraft, nämlich durch die Fliehkraft einer Unwuchtmasse erzeugt. Der Schneidkopf 822 kann wiederum so ausgebildet sein, wie er in einer der zuvor beschriebenen Varianten erläutert wurde, beispielsweise also wie in Figur 18 gezeigt. Anstelle eines Innenkanalsystems trägt der Schaft 820 einen Exzenterring 860, der vorzugsweise axial und in Drehrichtung verstellbar auf dem Schaft 820 sitzt, beispielsweise dort mittels einer Madenschraube 862 festklemmbar ist. Die axiale Verstellung erlaubt es, die Größe der dynamischen Radialkraft zu steuern, insbesondere an die Stabilität des Schafts anzupassen. Um die Schneidkanten des Schneidkopfs 822 nicht einseitig abzunutzen, ist s von Vorteil, den Unwuchtkörper 860 in regelmäßigen Zeitabständen zu verdrehen.

Anstelle eines gesonderten Unwuchtkörpers können selbstverständlich auch andere Maßnahmen zur Erzeugung der Unwuchtkräfte ergriffen werden. Die Unwucht kann beispielsweise in das Werkzeug einstückig integriert sein, indem ein asymmetrischer Anschliff angebracht ist.

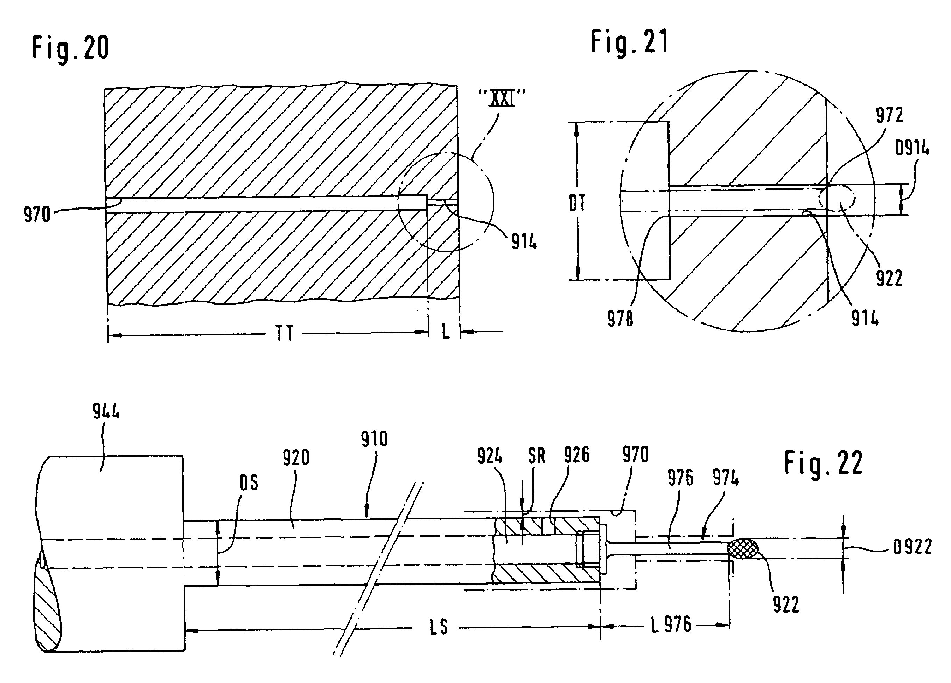

Anhand der Fig. 20 bis 22 wird ein Ausführungsbeispiel der Erfindung erläutert, mit dem es gelingt, extrem kleine und schwer zugängliche Bohrungen wirksam zu entgraten. Zur Vereinfachung der Beschreibung sind auch bei dieser Ausführungsform diejenigen Komponenten, die den Bauteilen der zuvor beschriebenene Varianten entsprechen mit ähnlichen Bezugszeichen versehen, denen jedoch eine "9" vorangestellt ist. Bei der zu entgratenden Bohrung 914 handelt es sich um eine Bohrung von beispielsweise von 0,7 mm Durchmesser und einer Länge L von beispielsweise 6 bis 7 mm, wobei sich diese Bohrung an eine Tieflochbohrung 970 anschließt, die ebenfalls einen kleinen Durchmesser DT von beispielsweise bis zu 4 mm und eine Tiefe TT von beispielsweise 80 mm hat. In

Fig. 21 ist die Konstellation im Bereich der Bohrung 914 im Maßstab M 10:1 dargestellt.

Mit strichpunktierter Linie ist der Spitzenbereich des Entgratungswerkzeugs 910 angedeutet, dessen Schneidkopf 922 soweit in die Bohrung 914 eingeführt ist, dass die Austrittskante 972 entgratet werden kann.

Das Werkzeug 910 ist in Fig. 22 maßstabsgetreu dargestellt, und zwar in einem Maßstab M von etwa 5:1.

An einen Einspannabschnitt 944 schließt sich ein Schaft 920 an, dessen Länge LS mindestens dem Maß TT der Bohrung 970 entspricht und dessen Durchmesser DS so gewählt ist, dass der Schaft 920 mit vorbestimmtem Radialspiel SR in der Bohrung 970 aufgenommen werden kann. Die Lagezuordnung zwischen der Bohrung 970 und dem für den Entgratvorgang in die Bohrung eingeführten Werkzeug 910 ist in Fig. 22 durch strichpunktierte Darstellung der Bohrung 970 angedeutet.

Der Schaft 920 hat wiederum eine Innenbohrung 924, über die Druckmittel von Einspannabschnitt 944 zuführbar ist. Mit dem Bezugszeichen 926 ist ein Radialkanal bezeichnet, dessen Mündungsöffnung der Innenwandung der Bohrung 970 in vorbestimmtem Abstand gegenüber liegt.

Der Schaft 920 trägt auf der dem Körper 944 abgewandten Seite eine sogenannte Entgratungslanze 974, die am Ende eines Stifts 976 den eigentlichen Schneidkopf 922 trägt. Der Durchmesser D922 des Schneidkopfs ist geringfügig kleiner als der Durchmesser D914 der Bohrung 914. Wie ferner aus der Fig. 22 erkennbar ist, ist die Entgratungslanze 974 lösbar am Werkzeugschaft 920 befestigt, beispielsweise derart angeschraubt, dass die Innenbohrung 924 verschlossen wird.

Aus der Beschreibung des Werkzeugs ist ersichtlich, dass bei Druckbeaufschlagung der Innenbohrung 924 durch die über den Umfang ungleichmäßige Verteilung der Radialbohrungen 926 eine radiale Auslenkung des Schafts 920 und damit des Schneidkopfs 922 hervorgerufen werden kann, wodurch der Entgratungsvorgang durchgeführt werden kann. Ebenso wie an der Stelle 972 kann auch der Bereich 978 der Bohrung 914 entgratet werden.

Die Ausgestaltung des Werkzeugs nach Fig. 22 erlaubt es, unterschiedliche Materialien für die Abschnitte 944, für den Schaft 920 und für die eigentliche Entgratungslanze 974 mit Schneidkopf 922 zu verwenden. Da der Schaft 920 im Vergleich zu seinem Durchmesser DS eine sehr große axiale Länge besitzt, hat es sich als vorteilhaft erwiesen diesen Schaft aus einem hochfesten Werkstoff herzustellen, dessen Elastizität so gewählt ist, dass die beim Entgraten auftretenden radialen Auslenkungen ausschließlich im elastischen Verformungsbereich des Werkstoffs liegen. Geeignete Materialien sind Hartstoffe, wie zum Beispiel Hartmetalle oder Cermets, aber auch Verbundwerkstoffe, wie zum Beispiel CFK-Verbundwerkstoffe.

Selbstverständlich ist die Form des Schneidkopfs 922 nicht auf die dargestellte Geometrie beschränkt. Es können vielmehr alle gängigen Geometrien zur Anwendung kommen, wobei auch die Ausgestaltung der Schneiden in weiten Grenzen variiert werden kann. Je nach axialer Länge der Bohrung 914 wird die Länge L976 des Stifts 976 ausgewählt.

Bezüglich der Gestaltung der Radialbohrung 926 besteht erneut ein großer Spielraum für die Gestaltung bzw. Variation nach Größe, Lage und Zahl, wie dies auch bei den zuvor beschriebenen Ausführungsbeispielen beschrieben worden ist.

Das Werkzeug gemäß Fig. 22 kann selbstverständlich auch durch eine in das Werkzeug integrierte Unwucht (wie im Zusammenhang mit den Fig. 18 und 19 beschrieben) zu den für den Entgratungsvorgang erforderlichen Bewegungen angeregt werden.

Selbstverständlich sind Abweichungen von den beschriebenen Ausführungsformen möglich, ohne den Grundgedanken der Erfindung zu verlassen.

So können beispielsweise mehrere innenliegende Strömungsmittelkanäle vorgesehen sein.

Wenn das Werkzeug zum Entgraten mehrerer in Axialrichtung gestaffelter Bohrungen herangezogen wird, ist es vorteilhaft, die Strömungsmittelversorgung des Werkzeug nur dann mit angehobenen Druck auszuführen, wenn der Schneidkopf in die Nähe der zu entgratenden Bohrungsmündung gelangt.

Auch bezüglich der Geometrie des Schneidkopfs soll die Erfindung nicht auf die dargestellten Ausführungsformen beschränkt sein. Beispiele für gängige und sinnvolle Gestaltungen des Schneidkopfs sind die Zylinderform, Flammenform, Kugelform, Walzenrundform, Spitzbogenform, Spitzkegelform, Rundbogenform, Scheibenform und Tropfenform, wie sie beispielsweise auch für Hartmetallfrässtifte - beispielsweise der Firma August Rüggeberg GmbH & Co. KG, PFERD-Werkzeuge, 51709 Marienheide - verwendet werden.

Das unter relativ hohem Druck stehende Strömungsmittel kann zusätzlich auch zum Entgraten genutzt werden, sei es durch den "Wasserschneideffekt", d.h. durch den Aufbau eines Schneidstrahls allein oder durch die von der radial austrenden Strömungsmittelströmung hervorgerufene Staudruckkraft, die zu einer radialen Auslenkung des Werkzeugschafts und damit des Schneidkopfs führt.

Die Erfindung schafft somit ein vorzugsweise drehangetriebenes Werkzeug zum Entgraten von Durchbrüchen wie zum Beispiel von Bohrungen, die seitlich in eine im wesentlichen zylindrische Ausnehmung münden. Das Werkzeug hat einen an einem Schaft sitzenden Schneidkopf, der zumindest eine Schneidkante hat, die sich zumindest abschnittsweise in axialer Richtung erstreckt. Damit das Entgraten zuverlässig und mit möglichst geringem Aufwand durchgeführt werden kann, ist in das Werkzeug eine Radialkraft-Erzeugungseinrichtung integriert, beispielsweise in Form zumindest eines innenliegenden Strömungsmittelkanals, von dem zumindest ein Stichkanal ausgeht, der im Bereich des Schneidkopfs vorzugsweise im Umfangsabstand zu der zumindest einen Schneidkante in dessen äußere Umfangsfläche mündet. Weil der Durchmesser des Schneidkopfs so gewählt ist, dass er mit radialem Spiel in die Ausnehmung einführbar ist, führt die entweder bei Drehung des Werkzeugs oder durch die Einspeisung von unter Druck stehendem Strömungsmittel erzeugte Radialkraft dazu, dass der Schneidkopf radial elastisch ausgelenkt wird, wodurch die Innenoberfläche der Ausnehmung sanft bearbeitet und dabei den Entgratvorgang zuverlässig durchführt werden kann.

## Patentansprüche

1. Werkzeug zum Entgraten von Bohrungen, wie zum Beispiel von Bohrungen, die seitlich in eine beispielsweise zylindrische Ausnehmung (14) münden, mit einem an einem flexiblen Schaft (20; 120; 220; 520; 620) sitzenden Schneidkopf (22; 222; 522; 622), der mit radialem Spiel in die Ausnehmung oder Bohrung einführbar ist und zumindest eine Schneidkante (20*; 520*; 620*) hat, die sich zumindest abschnittsweise in axialer Richtung erstreckt, **gekennzeichnet durch** eine in das Werkzeug integrierte Radialkraft-Erzeugungseinrichtung (24, 26, 28; 244; 326; 426; 526, 528; 624, 626, 628; 724, 728*; 860, 826; 924, 926)
- entweder in Form zumindest eines innenliegenden Strömungsmittelkanals (24; 124; 224; 524; 624; 924), von dem zumindest ein Stichkanal (26; 526; 626; 926) ausgeht, der im Bereich des Schneidkopfs (22; 522; 622; 922) oder zumindest in dessen axialer Nähe in eine äußere Umfangsfläche des Werkzeugs mündet, wobei **durch** die Einspeisung von unter Druck stehendem Strömungsmittel eine Radialkraft zur Ausnehmung oder Bohrung erzeugt wird, so dass der Schneidkopf radial elastich auslenkt und aufgrund einer Relativ-Drehbewegung zwischen Werkzeug und Werkstück eine Schneidbearbeitung vornimmt,
- oder in Form einer Unwuchtmasse (860), wobei der Schneidkopf (822) bei einer Drehbewegung des Werkzugs radial elastich auslenkt und aufgrund einer Relativ-Drehbewegung zwischen Werkzeug und Werkstück eine Schneidbearbeitung vornimmt.

2. Werkzeug mit einer einen Strömungsmittelkanal aufweisenden Radialkraft-Erzeugungseinrichtung nach Anspruch 1, **dadurch gekennzeichnet, dass** das Werkzeug drehantreibbar und der Schneidkopf (22; 522; 622; 722; 822; 922), dessen Durchmesser (DS) so gewählt ist, dass er mit radialem Spiel (SR) entweder in die Ausnehmung (14) oder in die Bohrung (12) einführbar ist, bei seiner Drehbewegung, vorzugsweise gesteuert, unter Nutzung der Flexibilität des den Schneidkopf (22; 522; 622; 722; 822; 922) tragenden Schafts (20; 120; 220; 520; 620) radial auslenkbar ist.

3. Werkzeug nach Anspruch 2, **dadurch gekennzeichnet, dass** der Stichkanal (26; 526; 626) im Umfangsabstand zu der zumindest einen Schneidkante (20*; 520*; 620*) in die äußere Umfangsfläche des Werkzeugs mündet.

4. Werkzeug nach Anspruch 2 oder 3, **dadurch gekennzeichnet, daß** mehrere Stichkanäle (26; 526; 626) mit einer entsprechenden Anzahl von Mündungsöffnungen (28; 528; 628) vorgesehen sind, die über den Umfang derart ungleichmäßig verteilt sind, dass die Summe der im Bereich der Mündungsöffnungen (28; 528; 628) zwischen dem Werkzeug bzw. dem Schneidkopf (22) und der Innenwandung der Ausnehmung (14) erzeugten Staudruckkräfte (FSD) den Schaft (20) in radialer Richtung auslenken können.

5. Werkzeug nach einem der Ansprüche 2 bis 4, **dadurch gekennzeichnet, daß** mehrere Stichkanäle (26; 626) vorgesehen sind, deren Mündungsöffnungen (28; 628) in axialer Richtung gestaffelt sind.

6. Werkzeug nach einem der Ansprüche 2 bis 5, **dadurch gekennzeichnet, daß** der zumindest eine Stichkanal (26; 526; 626) einen Durchmesser im Bereich von 0,1 bis 5 mm hat.

7. Werkzeug nach einem der Ansprüche 2 bis 6, **dadurch gekennzeichnet, daß** mehrere innenliegende Strömungsmittelkanäle vorgesehen sind.

8. Werkzeug nach einem der Ansprüche 2 bis 7, **dadurch gekennzeichnet, daß** zumindest eine der Mündungsöffnungen (26) im Bereich einer Schneidkante (20*) liegt.

9. Werkzeug nach einem der Ansprüche 2 bis 6, **dadurch gekennzeichnet, daß** zumindest eine der Mündungsöffnungen (28; 528; 628) im Bereich eines Nutgrundes zwischen zwei benachbarten Schneidkanten (20*) liegt.

10. Werkzeug nach einem der Ansprüche 2 bis 9, **dadurch gekennzeichnet, daß** der zumindest eine Stichkanal (26; 526; 626) geradlinig ausgebildet und vorzugsweise von einer Bohrung oder von einer erodierten Ausnehmung gebildet ist.

11. Werkzeug nach Anspruch 10, **dadurch gekennzeichnet, daß** der Winkel (WN) des Stickkanals (26) zur Achse (38) des Werkzeugs (10) im Bereich von 5 bis 175 °, vorzugsweise zwischen 40 und 60 ° liegt.

12. Werkzeug nach einem der Ansprüche 2 bis 11, **dadurch gekennzeichnet, daß** der Schaft (20) auf der dem Schneidkopf abgewandten Seite einen Körper (44; 144; 244A) trägt, über den das Strömungsmittel in den zumindest einen Strömungsmittelkanal (24; 124; 224) einspeisbar ist.

13. Werkzeug nach Anspruch 12, **dadurch gekennzeichnet, daß** der Körper zur Einspeisung des Strömungsmittels gleichzeitig einen Befestigungs- und Fixierungskörper (44; 144) bildet, mit dem das Werkzeug in einer Werkzeugaufnahme (30; 130) dreh- und verschiebefest fixierbar ist..

14. Werkzeug nach einem der Ansprüche 2 bis 13, **dadurch gekennzeichnet, dass** die Vielzahl der Mündungsöffnungen (526; 626) in einem Umfangsbereich liegen, der von einem Zentriwinkel (WZ) begrenzt ist, welcher bis zu 120° bis 140° beträgt.

15. Werkzeug nach Anspruch 14, **dadurch gekennzeichnet, daß** die Mehrzahl von Mündungsöffnungen (528; 628) in Umfangsrichtung gleichmäßig zueinander versetzt angeordnet sind.

16. Werkzeug nach einem der Ansprüche 2 bis 15, **dadurch gekennzeichnet, daß** die Mündungsöffungen (628) auf zumindest einer im Wesentlichen wendelförmigen Linie liegen.

17. Werkzeug mit einer eine Unwuchtmasse aufweisenden Radialkraft-Erzeugungseinrichtung nach Anspruch 1, **dadurch gekennzeichnet, dass** der Schneidkopf bei seiner Drehbewegung gesteuert radial auslenkbar ist.

18. Werkzeug nach Anspruch 17, **dadurch gekennzeichnet, dass** die Unwuchtmasse einstückig mit dem Werkzeug ausgebildet ist.

19. Werkzeug nach Anspruch 17, **dadurch gekennzeichnet, dass** die Umwuchtmasse (860) als separates Bauteil am Werkzeug lageveränderlich befestigt ist.

20. Werkzeug nach einem der Ansprüche 1 bis 19, **gekennzeichnet durch** eine Vielzahl von über den Umfang verteilten Schneidkanten (20*; 520*; 620*).

21. Werkzeug nach einem der Ansprüche 1 bis 20, **dadurch gekennzeichnet, daß** der Schaft (20) eine Länge im Bereich von 5 bis 1000 mm hat.

22. Werkzeug nach einem der Ansprüche 1 bis 21, **dadurch gekennzeichnet, daß** der Schaft (20; 520; 620) im Verhältnis zum Durchmesser (DS) des Schneidkopfs (22; 522; 622) verjüngt ist.

23. Werkzeug nach einem der Ansprüche 1 bis 22, **dadurch gekennzeichnet, daß** die zumindest eine Schneidkante (20*; 520*; 620*) zu einer Axialebene (EA) des Werkzeugs (10) unter einem Winkel angestellt ist.

24. Werkzeug nach einem der Ansprüche 1 bis 23, **dadurch gekennzeichnet, daß** der Schneidkopf (22; 722) zumindest auf seiner dem Schaft (20; 720) abgewandten Seite einen Anschnitt (40; 740) hat, der vorzugsweise von einer Anfasung oder einer Rundung gebildet ist.

25. Werkzeug nach einem der Ansprüche 1 bis 24, **dadurch gekennzeichnet, daß** der Schneidkopf zumindest um ein Maß radial auslenkbar ist, das im Bereich zwischen 0,1 und 5 mm liegt.

26. Werkzeug nach einem der Ansprüche 1 bis 25, **dadurch gekennzeichnet, daß** zumindest der Schneidkopf aus einem hochfesten Werkstoff, wie z.B. aus verschleißfestem Stahl, Schnellstahl wie HSS, HSSE oder HSSEBM, Hartmetall, Keramik, Cermet oder aus einem anderen Sintermetall-Werkstoff hergestellt ist.

27. Werkzeug nach einem der Ansprüche 1 bis 26, **dadurch gekennzeichnet, daß** der Schaft (20) auf der dem Schneidkopf (22) abgewandten Seite einen Befestigungs- und Fixierungskörper (44; 144; 244) trägt, mit dem das Werkzeug in einer Werkzeugaufnahme (30; 130) dreh- und verschiebefest fixierbar ist.

28. Werkzeug nach einem der Ansprüche 1 bis 27, **gekennzeichnet durch** die Ausbildung als Fräs-, Bohr-, insbesondere Tieflochbohr-, geradegenutetes Bohr- oder Spiralbohrwerkzeug oder als Reibahle.

29. Werkzeug nach einem der Ansprüche 1 bis 28, **dadurch gekennzeichnet, dass** die zumindest eine Schneidkante (620*) einen positiven Spanwinkel (RSW) hat.

30. Werkzeug nach einem der Ansprüche 1 bis 28, **dadurch gekennzeichnet, dass** die zumindest eine Schneidkante (520*) einen negativen Spanwinkel hat.

31. Werkzeug nach einem der Ansprüche 1 bis 30, **dadurch gekennzeichnet, daß** die zumindest eine Schneidkante (520*) im Wesentlichen wendelförmig verläuft.

32. Werkzeug nach einem der Ansprüche 1 bis 31, **dadurch gekennzeichnet, dass** zumindest der Schaft (20; 920) aus einem hochfesten Werkstoff, wie z.B. aus einem Hartstoff, einem Hartmetall, einem Cermet-Werkstoff oder einem Verbundwerkstoff wie z.B. einem CFK-Werkstoff besteht und eine solche Elastizität hat, dass die beim Entgratvorgang auftretenden radialen Auslenkungen des Schneidkopfs und damit des Schafts ausschließlich im elastischen Verformungsbereich liegen.

33. Werkzeug nach einem der Ansprüche 1 bis 32, **gekennzeichnet durch** eine Beschichtung, vorzugsweise in der Ausgestaltung als Hartstoffschicht, wie z.B. aus Diamant, vorzugsweise nanokristallinem Diamant, aus TiN oder aus (Ti,Al)N, einer Mehrlagen-Schicht oder einer Schicht bestehend aus Nitriden mit den Metallkomponenten Cr, Ti und Al und vorzugsweise einem geringen Anteil von Elementen zur Kornverfeinerung besteht, wobei der Cr-Anteil bei 30 bis 65 %, vorzugsweise 30 bis 60 %, besonders bevorzugt 40 bis 60 %, der Al-Anteil bei 15 bis 35 %, vorzugsweise 17 bis 25 %, und der Ti-Anteil bei 16 bis 40 %, vorzugsweise 16 bis 35 %, besonders bevorzugt 24 bis 35 %, liegt, und zwar jeweils bezogen auf alle Metallatome in der gesamten Schicht.

34. Werkzeug nach Anspruch 33, **dadurch gekennzeichnet, dass** der Aufbau der gesamten Schicht aus einer homogenen Mischphase besteht.

35. Werkzeug nach Anspruch 33 oder 34, **dadurch gekennzeichnet, dass** der Aufbau der gesamten Schicht aus mehreren in sich homogenen Einzellagen besteht, die abwechselnd einerseits aus (TiₓAlyY_{z})N mit x = 0,38 bis 0,5 und y = 0,48 bis 0,6 und z = 0 bis 0,04 und andererseits aus CrN bestehen, wobei vorzugsweise die oberste Lage der Verschleißschutzschicht von der CrN-Schicht gebildet ist.

36. Vorrichtung zum Entgraten von Bohrungen, die seitlich in eine im wesentlichen zylindrische Ausnehmung (14) münden, mit einem Werkzeug mit einer einen Strömungsmittelkanal aufweisenden Radialkraft-Erzeugungseinrichtung nach einem der Ansprüche 1 bis 16 und 20 bis 35, **gekennzeichnet durch** eine Drehantriebsvorrichtung (32) und eine Strömungsmittelquelle (36) zur Einspeisung von unter Druck stehendem Strömungsmittel in den zumindest einen Strömungsmittelkanal (24).

37. Vorrichtung nach Anspruch 36, **dadurch gekennzeichnet, daß** das Strömungsmittel von von einem flüssigen oder gasförmigen Kühl- und Schmiermittel gebildet ist.

38. Vorrichtung nach Anspruch 36 oder 37, **dadurch gekennzeichnet, daß** eine Druckerzeugseinrichtung (36) vorgesehen ist, mit der ein Strömungsmitteldruck in einem Bereich von 3 bis 3000 bar erzeugbar ist.

39. Vorrichtung nach einem der Ansprüche 36 bis 38, mit einem Werkzeug nach Anspruch 14, **gekennzeichnet durch** eine Werkzeugaufnahme, in der der Befestigungs- und Fixierungskörper (244) nach Art eines Bajonettverschlusses aufgenommen ist.

40. Vorrichtung zum Entgraten von Bohrungen, die seitlich in eine im wesentlichen zylindrische Ausnehmung (14) münden, insbesondere nach einem der Ansprüche 37 bis 40, mit einem Werkzeug mit einer einen Strömungsmittelkanal aufweisenden Radialkraft-Erzeugungseinrichtung nach Anspruch 1 und 13, das auf der einem Schneidkopf abgewandten Seite einen prismatischen, insbesondere einen zylindrischen Körper zur Einspeisung von unter Druck stehendem Strömungsmittel trägt, **dadurch gekennzeichnet, daß** der Befestigungs- und Fixierungskörper (44; 144) in der Werkzeugaufnahme (30; 130) axial und drehfest fixierbar ist, wenn dieser mit Strömungsmitteldruck beaufschlagt wird.

41. Vorrichtung nach Anspruch 40, **dadurch gekennzeichnet, daß** die Werkzeugaufnahme mit einer zylindrischen Aufnahmebohrung (154) für den Körper (144) zur Einspeisung des Strömungsmittels und einem mit einer Schlüssellochausnehmung (152) ausgebildeten radial verstellbaren Riegelkörper (150) ausgestettet ist, gegen den eine Schulter (156) des Befestigungs- und Fixierungskörpers (144) drückbar ist, wenn der Strömungsmitteldruck in den Befestigungs- und Fixierungskörper (144) eingespeist wird.

42. Verfahren zum Entgraten von Bohrungen, die seitlich in eine im wesentlichen zylindrische Ausnehmung (14) münden, mittels einer Vorrichtung nach einem der Ansprüche 36 bis 41, **dadurch gekennzeichnet, daß** der Druck des Strömungsmittels, welches durch das in die Ausnehmung (14) eingeführte Werkzeug (10) geleitet wird, dazu genutzt wird, den Schneidkopf (22) als zusammenhängendes Teil radial auszulenken und **dadurch** die zumindest eine Schneidkante (20*) in Eingriff mit dem zu entfernenden Span gelangen zu lassen.

43. Verfahren nach Anspruch 42, **dadurch gekennzeichnet, daß** der Strömungsmitteldruck derart hoch angehoben wird, dass das aus der zumindest einen Mündungsöffnung (28) austretende Strömungsmittel einen Schneidstrahl erzeugt, mit dem eine spanabhebende Bearbeitung bewirkt werden kann.

44. Verfahren nach Anspruch 42 oder 43, **gekennzeichnet durch** folgende Verfahrensschritte:
a) Einführen des eine Realativ-Drehbewegung bezüglich eines mit der Ausnehmung (14) versehenen Werkstücks ausführenden Werkzeugs (10) in die Ausnehmung und
b) Aufbauen einer Strömung des unter Druck gesetzten Strömungsmittels **durch** das Werkzeug (10) bei gleichzeitiger radialer Auslenkung des Schneidkopfs (22).

45. Verfahren nach Anspruch 44, **dadurch gekennzeichnet, daß** während des Verfahrensschritts b) das Werkzeug (10) und/oder das Werkstück eine Vorschubbewegung ausführt.

46. Verfahren nach einem der Ansprüche 42 bis 45, **dadurch gekennzeichnet, daß** das Werkzeug (10) und/oder das Werkstück mit einer Drehzahl im Bereich zwischen 100 und 50000 U/min angetrieben wird.

47. Verfahren nach einem der Ansprüche 42 bis 46, **dadurch gekennzeichnet, daß** die Schnittgeschwindigkeit im Bereich zwischen 20 und 300 m/min gewählt wird.

## Claims

1. A tool for deburring a bore, such as for example bores that open laterally into a cylindrical recess (14) that is for example cylindrical, comprising a cutting head (22; 222; 522; 622) seated on a flexible shaft (20; 120; 220; 520; 620), the cutting head being adapted to be introduced into the recess or bore with radial play and having at least one cutting edge (20*; 520*; 620*) that extends, at least in sections, in the axial direction, **characterized by** a radial force-producing device (24, 26, 28; 244; 326; 426; 526, 528; 624, 626, 628; 724, 728*; 860, 826; 924, 926) that is integrated into the tool
- either having the form of at least one internally situated flow medium channel (24; 124; 224; 524; 624; 924) from which at least one corresponding branch channel (26; 526; 626; 826) starts, which branch channel has at least one opening that opens into an external peripheral surface of the tool in the area of the cutting head or in axial vicinity of the latter, wherein a radial force relative to the recess or bore being generated by feeding pressurized flow medium such that the cutting head is deflected elastically and executes cutting processing as the result of a relative rotational movement between tool and workpiece,
- or having the form of an imbalance mass (860), wherein said cutting head (822) is deflected elastically and executes cutting processing as the result of a relative rotational movement between tool and workpiece.

2. A tool comprising a radial force-producing device which has a flow medium channel according to claim 1, **characterized in that** the tool is adapted to be driven rotationally, and the cutting head (22; 522; 622, 722; 822; 922), the diameter (DS) of which is selected such that it may be introduced into either the recess (14) or the bore (12) at radial play (SR), is adapted to be radially deflected during its rotational movement, preferably in a controlled manner, by making use of the flexibility of the shaft (20; 120; 220; 520; 620) supporting the cutting head (22; 522; 622, 722; 822; 922).

3. The tool according to claim 2, **characterized in that** the branch channel (26; 526; 626) opens into the external peripheral surface of the tool at a peripheral distance from the at least one cutting edge (20*; 520*; 620*).

4. The tool according to claim 2 or 3, **characterized in that** a plurality of branch channels (26; 526; 626) are provided with a corresponding number of openings (28; 528; 628) that are distributed over the peripheral surface in a non-uniform fashion such that the sum of the dynamic pressure forces produced in the area of the openings between the tool or the cutting head (22) and the inner wall of the recess (14) may deflect the shaft (20) in the radial direction.

5. The tool according to any one of claims 2 to 4, **characterized in that** a plurality of branch channels (26; 626) are provided whose openings (28; 628) are staggered in the axial direction.

6. The tool according to any one of claims 2 to 5, **characterized in that** the at least one branch channel (26; 526; 626) has a diameter in the range from 0.1 to 5 mm.

7. The tool according to any one of claims 2 to 6, **characterized in that** a plurality of internally situated flow medium channels are provided.

8. The tool according to any one of claims 2 to 6, **characterized in that** the at least one opening (26) is situated in the area of a cutting edge (20*).

9. The tool according to any one of claims 2 to 6, **characterized in that** at least one of the openings (28; 528; 628) is situated in the area of a groove bottom between two adjacent cutting edges (20*).

10. The tool according to any one of claims 2 to 9, **characterized in that** the at least one branch channel (26; 526; 626) has a rectilinear form or is formed by an eroded recess.

11. The tool according to claim 10, **characterized in that** the angle (WN) formed by the branch channel (26) with the axis (38) of the tool (10) is in the range from 5 to 175 degrees, preferably between 40 and 60 degrees.

12. The tool according to any one of claims 2 to 11, **characterized in that** on the side facing away from the cutting head, the shaft (20) carries an element (44; 144; 244A) via which the flow medium may be fed into the at least one flow medium channel (24; 124; 224).

13. The tool according to claim 12, **characterized in that** the element for feeding in the flow medium at the same time forms a fastening and fixing element (44; 144) whereby the tool may be fixed in a tool holding fixture (30; 130) so as to be secured against rotation and sliding displacement.

14. The tool according to any one of claims 2 to 13, **characterized in that** the plurality of the openings (526; 626) are situated in a peripheral area that is limited by a central angle (WZ) in a range from 120 to 140 degrees.

15. The tool according to claim 14, **characterized in that** the plurality of openings (526; 626) are situated so as to be uniformly offset from one another in the peripheral direction.

16. The tool according to any one of claims 2 to 15, **characterized in that** the openings (628) are situated on at least one line that is essentially helical.

17. A tool comprising a radial force-producing device according to claim 1 which includes an imbalance mass, **characterized in that** the cutting head is adapted to be deflected radially in a controlled manner during its rotational movement.

18. The tool according to claim 17, **characterized in that** the imbalance mass is formed in one piece with the tool.

19. The tool according to claim 17, **characterized in that** the imbalance mass (860) is fastened to the tool as a separate component in a position-adjustable fashion.

20. The tool according to any one of claims 1 to 19, **characterized by** a multiplicity of cutting edges (20*; 520*; 620*) distributed over the periphery.

21. The tool according to any one of claims 1 to 20, **characterized in that** the shaft (20) has a length in a range from 5 to 1000 mm.

22. The tool according any one of claims 1 to 21, **characterized in that** the shaft (20; 520; 620) is tapered in relation to the diameter (DS) of the cutting head (22; 522; 622).

23. The tool according to any one of claims 1 to 22, **characterized in that** the at least one cutting edge (20*; 520*; 620*) is set at an angle with an axial plane (EA) of the tool (10).

24. The tool according to any one of claims 1 to 23, **characterized in that** the cutting head (22; 722) has, at least on its side facing away from the shaft (20; 720), a notch (40; 740) that is preferably formed by a chamfer or a rounded section.

25. The tool according to any one of claims 1 to 24, **characterized in that** the cutting head is adapted by at least a quantity situated between 0.1 and 5 mm.

26. The tool according to any one of claims 1 to 25, **characterized in that** at least the cutting head is made of a high-strength material such as, e.g., wear-resistant steel, high-speed steel such as HSS, HSSE, or HSSEBM, hard metal, ceramic, cermet, or of another sintered metal material.

27. The tool according to any one of claims 1 to 26, **characterized in that** the shaft (20) carries, on the side facing away from the cutting head (22), a fastening and fixing element (44; 144; 244) whereby the tool may be fixed in a tool holding fixture (30; 130) so as to be secured against rotation and sliding displacement..

28. The tool according to any one of claims 1 to 27, **characterized by** being formed as a milling tool, a boring tool, in particular a deep hole boring tool, a straight-fluted boring or spiral boring tool, or as a reamer.

29. The tool according to any one of claims 1 to 28, **characterized in that** the at least one cutting edge (620*) has a positive cutting angle (RSW).

30. The tool according to any one of claims 1 to 28, **characterized in that** the at least one cutting edge (520*) has a negative cutting angle.

31. The tool according to any one of claims 1 to 30, **characterized in that** the at least one cutting edge (520*) extends essentially in a helical form.

32. The tool according to any one of claims 1 to 31, **characterized in that** at least the shaft (20; 920) is made of a high-strength material such as, e.g., a hard material, a hard metal, a cermet material or a compound material such as, e.g., a carbon-fiber plastic material, and has an elasticity such that the radial deflections of the cutting head and thus of the shaft that occur during the deburring process fall within the range of elastic deformation exclusively.

33. The tool according to any one of claims 1 to 32, **characterized by** a coating preferably executed as a hard material coating such as, e.g., of diamond, preferably non-crystalline diamond, TiN, (Ti, Al)N, a multi-layer coating or a coating comprised of nitrides with the metal components Cr, Ti and Al, and preferably a low proportion of elements for grain refinement, wherein the Cr content is at 30 to 65%, the Al content is at 15 to 35%, and the Ti content is at 16 to 40%, preferably 16 to 35%, relative to all metal atoms in the overall coating.

34. The tool according to claim 33, **characterized in that** the structure of the entire coating is made up of a homogenous mixed phase.

35. The tool according to claim 33 or 34, **characterized in that** the structure of the entire coating is made up of a plurality of individual layers that are homogenous in themselves, alternatingly made up one the one hand of (TiₓAl_{y}Y_{z})N, with x = 0.38 to 0.5 and y = 0.48 to 0.6, and z = 0 to 0.04, and on the other hand of CrN, with the topmost layer of the wear protection coating preferentially being formed by the CrN layer.

36. An apparatus for deburring bores that open laterally into an essentially cylindrical recess (14), by means of a tool comprising a radial force-producing device according to any one of claims 1 to 16 and 20 to 35 which includes a flow medium channel, **characterized by** a rotational drive device (32) and a flow medium source (36) for feeding pressurized flow medium into the at least one flow medium channel (24).

37. The apparatus according to claim 36, **characterized in that** the flow medium is constituted by a liquid or gaseous cooling agent and lubricant.

38. The apparatus according to claim 36 or 37, **characterized in that** a pressure producing device (36) is provided whereby a flow medium pressure in a range from 3 to 3000 bar may be produced.

39. The apparatus according to any one of claims 36 to 38 including a tool according to claim 14, **characterized by** a tool holding fixture wherein the fastening and fixing element (244) is accommodated in the manner of a bayonet catch.

40. An apparatus for deburring bores that open laterally into an essentially cylindrical recess (14), in particular according to any one of claims 37 to 40, including a tool comprising a radial force-producing device according to clam 1 and 13, that supports on the side facing away from the cutting head a prismatic, in particular cylindrical element for feeding in pressurized flow medium, **characterized in that** the fastening and fixing element (44;144) is adapted to be fixed in a manner preventing axial and rotational movement when subjected to flow medium pressure.

41. The apparatus according to claim 40, **characterized in that** the tool holding fixture is equipped with a cylindrical receiving bore (154) for the element (144) for feeding in the flow medium, and with a radially adjustable locking element (150) formed with a keyhole opening (152), against which locking element a shoulder (156) of the fastening and fixing element (144) can be pressed when the flow medium pressure is fed into the fastening and fixing element (144).

42. A method for deburring bores that open laterally into an essentially cylindrical recess (14), with the aid of an apparatus according to any one of claims 36 to 41, **characterized in that** the pressure of the flow medium that is passed through the tool (10) introduced into the recess (14) is used to radially deflect the cutting head (22) as a coherent part and thereby have the at least one cutting edge (20*) engage the chip to be removed.

43. The method according to claim 42, **characterized in that** the flow medium pressure is raised to such a high level that the flow medium exiting from the at least one opening (28) forms a cutting jet whereby a machining processing can be effected.

44. The method according to claim 42 or 43, **characterized by** the following method steps:
a) introducing the tool (10), which is executing a relative rotational movement with respect to a workpiece provided with the recess (14), into the recess, and
b) initiating a flow of the pressurized flow medium through the tool (10) at a concurrent radial deflection of the cutting head (22).

45. The method according to claim 44, **characterized in that** during method step b), at least one of the tool (10) and the workpiece executes an advancing movement.

46. The method according to any one of claims 42 to 45, **characterized in that** at least one of the tool (10) and the workpiece is driven with a rotational speed in the range between 100 and 50,000 RPM.

47. The method according to any one of claims 42 to 46, **characterized in that** the cutting speed is selected in the range between 20 and 300 m/min.

## Revendications

1. Outil pour l'ébavurage de trous, comme par exemple des trous qui débouchent latéralement dans un évidement (14), par exemple cylindrique, avec une tête de coupe (22 ; 222 ; 522 ; 622) montée sur une tige flexible (20 ; 120 ; 220 ; 520 ; 620) et qui peut être introduite avec jeu radial dans l'évidement ou dans le trou et possède au moins une arête de coupe (20*; 520*; 620*) qui s'étend au moins par tronçons en direction axiale, **caractérisé par** un système de génération de force radiale (24, 26, 28 ; 244 ; 326 ; 426 ; 526, 528 ; 624, 626, 628 ; 724, 728*; 860, 826 ; 924, 926) intégré dans l'outil
- soit sous la forme d'au moins un canal central d'écoulement (24 ; 124 ; 224 ; 524 ; 624 ; 924) situé à l'intérieur et duquel part au moins un canal dérivé (26 ; 526 ; 626 ; 926) qui débouche dans la région de la tête de coupe (22 ; 522 ; 622 ; 922) ou au moins dans son voisinage axial vers une surface périphérique extérieure de l'outil, dans lequel par alimentation d'un fluide sous pression une force radiale est engendrée vers l'évidement ou vers le trou, de sorte que la tête de coupe se défléchit élastiquement radialement et exécute un travail de coupe en raison d'un mouvement de rotation relatif entre l'outil et la pièce à oeuvrer,
- soit sous la forme d'une masse de balourd (860), telle que la tête de coupe (822) se défléchit élastiquement radialement lors d'un mouvement de rotation de l'outil et exécute un travail de coupe en raison d'un mouvement de rotation relatif entre l'outil et la pièce à oeuvrer.

2. Outil comprenant un système de génération de force radiale comportant un canal d'écoulement central, selon la revendication 1, **caractérisé en ce que** l'outil est susceptible d'être entraîné en rotation et la tête de coupe (22 ; 522 ; 622 ; 722 ; 822 ; 922), dont le diamètre (DS) est ainsi choisi qu'elle peut être introduite avec jeu radial (SR) soit dans l'évidement (14) soit dans le trou (12), est susceptible d'être défléchie radialement, lors de son mouvement de rotation et de préférence de façon commandée, en exploitant la flexibilité de la tige (20 ; 120 ; 220 ; 520 ; 620) qui porte la tête de coupe (22 ; 522 ; 622 ; 722 ; 822 ; 922).

3. Outil selon la revendication 2, **caractérisé en ce que** le canal dérivé (26 ; 526 ; 626) débouche dans la surface périphérique extérieure de l'outil à distance périphérique de ladite au moins une arête de coupe (120*; 520*; 620*).

4. Outil selon la revendication 2 ou 3, **caractérisé en ce qu'**il est prévu plusieurs canaux dérivés (26 ; 526 ; 626) avec un nombre correspondant d'ouvertures d'embouchure (28 ; 528 ; 628) qui sont réparties sur la périphérie de façon irrégulière de sorte que la somme des forces de pression dynamique (FSD) générées dans la région des ouvertures d'embouchure (28 ; 528 ; 628) entre l'outil ou la tête de coupe (22) et la paroi intérieure de l'évidement (14) sont capables de faire dévier la tige (20) en direction radiale.

5. Outil selon l'une des revendications 2 à 4, **caractérisé en ce qu'**il est prévu plusieurs canaux dérivés (26 ; 626), dont les ouvertures d'embouchure (28 ; 628) sont étagées en direction axiale.

6. Outil selon l'une des revendications 2 à 5, **caractérisé en ce que** ledit au moins un canal dérivé (26 ; 526 ; 626) a un diamètre dans la plage de 0,1 à 5 mm.

7. Outil selon l'une des revendications 2 à 6, **caractérisé en ce qu'**il est prévu plusieurs canaux d'écoulement centraux situés à l'intérieur.

8. Outil selon l'une des revendications 2 à 7, **caractérisé en ce que** l'une au moins des ouvertures d'embouchure (26) est située dans la région d'une arête de coupe (20*).

9. Outil selon l'une des revendications 2 à 6, **caractérisé en ce que** l'une au moins des ouvertures d'embouchure (28 ; 528 ; 628) est située dans la région du fond d'une gorge entre deux arêtes de coupe voisines (20*).

10. Outil selon l'une des revendications 2 à 9, **caractérisé en ce que** ledit au moins un canal dérivé (26 ; 526 ; 626) est réalisé rectiligne et est de préférence formé par un perçage ou par un évidement ménagé par érosion.

11. Outil selon la revendication 10, **caractérisé en ce que** l'angle (WN) du canal dérivé (26) par rapport à l'axe (38) de l'outil (10) est dans la plage de 5 à 175°, de préférence entre 40 et 60°.

12. Outil selon l'une des revendications 2 à 11, **caractérisé en ce que** la tige (20) porte, sur le côté détourné de la tête de coupe, un corps (44 ; 144 ; 244A) via lequel le fluide peut être alimenté dans ledit au moins un canal d'écoulement central (24 ; 124 ; 224).

13. Outil selon la revendication 12, **caractérisé en ce que** le corps pour l'alimentation du fluide forme simultanément un corps de fixation et d'immobilisation (44 ; 144), au moyen duquel l'outil est susceptible d'être fixé solidairement en rotation et en translation dans un dispositif de réception d'outil (30 ; 130).

14. Outil selon l'une des revendications 2 à 13, **caractérisé en ce que** la pluralité d'ouvertures d'embouchure (526 ; 626) sont disposées dans une plage périphérique qui est limitée par un angle au centre (WZ) qui s'élève jusqu'à 120° à 140°.

15. Outil selon la revendication 14, **caractérisé en ce que** la pluralité d'ouvertures d'embouchure (528 ; 628) sont agencées de façon décalée régulièrement les unes par rapport aux autres en direction périphérique.

16. Outil selon l'une des revendications 2 à 15, **caractérisé en ce que** les ouvertures d'embouchure (626) sont situées sur au moins une ligne essentiellement hélicoïdale.

17. Outil comprenant un système de génération de force radiale comportant une masse de balourd selon la revendication 1, **caractérisé en ce que** la tête de coupe est susceptible d'être défléchie radialement de façon commandée lors de son mouvement de rotation.

18. Outil selon la revendication 17, **caractérisé en ce que** la masse de balourd est réalisée d'une seule pièce avec l'outil.

19. Outil selon la revendication 17, **caractérisé en ce que** la masse de balourd (860) est fixée en position variable à titre de composant séparé sur l'outil.

20. Outil selon l'une des revendications 1 à 19, **caractérisé par** une pluralité d'arêtes de coupe (20*; 520*; 620*).

21. Outil selon l'une des revendications 1 à 20, **caractérisé en ce que** la tige (20) a une longueur dans la plage de 5 à 1000 mm.

22. Outil selon l'une des revendications 1 à 21, **caractérisé en ce que** la tige (20 ; 520 ; 620) est rétrécie en relation au diamètre (DS) de la tête de coupe (22 ; 522 ; 622).

23. Outil selon l'une des revendications 1 à 22, **caractérisé en ce que** ladite au moins une arête de coupe (20*; 520*; 620*) est disposée sous un angle par rapport à un plan axial (EA) de l'outil (10).

24. Outil selon l'une des revendications 1 à 23, **caractérisé en ce que** la tête de coupe (22 ; 722) possède, au moins sur son côté détourné de la tige (20 ; 720), une découpe (40 ; 740) qui est formée de préférence par un chanfrein ou par un arrondi.

25. Outil selon l'une des revendications 1 à 24, **caractérisé en ce que** la tête de coupe est susceptible d'être défléchie radialement d'une distance qui est dans la plage entre 0,1 et 5 mm.

26. Outil selon l'une des revendications 1 à 25, **caractérisé en ce que** la tête de coupe au moins est fabriquée en un matériau à haute résistance, comme par exemple de l'acier résistant à l'usure, de l'acier rapide comme HSS, HSSE ou HSSEBM, métal dur, céramique, cermet, ou en un autre matériau à base de métal fritté.

27. Outil selon l'une des revendications 1 à 26, **caractérisé en ce que** la tige (20) porte, sur le côté détourné de la tête de coupe (22), un corps de fixation et d'immobilisation (44 ; 144 ; 244) au moyen duquel l'outil peut être fixé solidairement en rotation et en translation dans un dispositif (30 ; 130) récepteur d'outil.

28. Outil selon l'une des revendications 1 à 27, **caractérisé en ce qu'**il est réalisé sous forme d'outil de fraisage, de perçage, en particulier de perçage de trous profonds, de perçage à gorge droite, ou de perçage spiralé, ou encore sous forme d'alésoir.

29. Outil selon l'une des revendications 1 à 28, **caractérisé en ce que** ladite au moins une arête de coupe (620*) présente un angle de coupe (RSW) positif.

30. Outil selon l'une des revendications 1 à 28, **caractérisé en ce que** ladite au moins une arête de coupe (520*) présente un angle de coupe négatif.

31. Outil selon l'une des revendications 1 à 30, **caractérisé en ce que** ladite au moins une arête de coupe (520*) s'étend sensiblement en forme d'hélice.

32. Outil selon l'une des revendications 1 à 31, **caractérisé en ce que** la tige (20 ; 920) au moins est fabriquée en un matériau à haute résistance, comme par exemple un matériau dur, un métal dur, un matériau à base de cermet, ou un matériau composite, comme par exemple une matière plastique renforcée par des fibres de carbone et présente une élasticité telle que les déflexions radiales de la tête de coupe qui se produisent lors du processus d'ébavurage et ainsi de la tige se trouvent exclusivement dans la plage de déformation élastique.

33. Outil selon l'une des revendications 1 à 32, **caractérisé par** un revêtement, de préférence sous la forme d'une couche de matière dure, comme par exemple en diamant et de préférence en diamant nanocristallin, en TiN ou en (Ti,Al)N, une couche à plusieurs épaisseurs ou une couche composée de nitrure avec les composants métalliques Cr, Ti et Ar, et de préférence un nombre faible d'éléments pour l'affinage des grains, dans lequel la part de Cr est de 30 à 65 %, de préférence 30 à 60 % et de façon particulièrement préférée 40 à 60 %, la part de Al est de 15 à 35 %, de préférence de 17 à 25 %, et la part de Ti est de 16 à 40 %, de préférence 16 à 35 %, et de façon particulièrement préférée 24 à 35 %, et à chaque fois par référence à tous les atomes métalliques dans la totalité de la couche.

34. Outil selon la revendication 33, **caractérisé en ce que** la structure de la couche entière est une phase mixte homogène.

35. Outil selon la revendication 33 aux 34, **caractérisé en ce que** la structure de la couche totale est composée de plusieurs couches individuelles homogènes en elles-mêmes, qui sont alternativement composées d'une part de (TiₓAl_{y}Y_{z})N avec x = 0,38 à 0,5 et y = 0,48 à 0,6 et z = 0 à 0,04, et d'autre part de CrN, et ici de préférence la couche la plus élevée de la couche de protection anti-usure est formée par la couche CrN.

36. Dispositif pour ébavurer des trous qui débouchent latéralement dans un évidement (14) sensiblement cylindrique, avec un outil comportant un système de génération de force radiale, présentant un canal central d'écoulement, selon l'une des revendications 1 à 16 et 20 à 35, **caractérisé par** un dispositif d'entraînement en rotation (32) et par une source de fluide (36) pour l'alimentation de fluide sous pression dans ledit au moins un canal d'écoulement central (24).

37. Dispositif selon la revendication 36, **caractérisé en ce que** le fluide est formé par un produit de refroidissement et de lubrification liquide ou gazeux.

38. Dispositif selon la revendication 36 ou 37, **caractérisé en ce qu'**il est prévu un système de génération de pression (36) au moyen duquel une pression de fluide dans une plage de 3 à 3000 bars peut être engendrée.

39. Dispositif selon l'une des revendications 36 à 38 avec un outil selon la revendication 14, **caractérisé par** un dispositif de réception d'outil dans lequel est reçu le corps de fixation et d'immobilisation (244) à la manière d'une fermeture à baïonnette.

40. Dispositif pour ébavurer des trous qui débouchent latéralement dans un évidement (14) sensiblement cylindrique, en particulier selon l'une des revendications 37 à 40, avec un outil comprenant un système de génération de force radiale présentant un canal central d'écoulement selon les revendications 1 et 13, qui porte sur le côté détourné de la tête de coupe un corps prismatique, en particulier cylindrique, pour l'alimentation de fluide sous pression, **caractérisé en ce que** le corps de fixation et d'immobilisation (44 ; 144) est susceptible d'être fixé axialement et solidairement en rotation dans le dispositif (30 ; 130) de réception d'outil quand celui-ci est alimenté en fluide sous pression.

41. Dispositif selon la revendication 40, **caractérisé en ce que** le dispositif de réception d'outil est doté d'un perçage de réception cylindrique (154) pour le corps (144), destiné à l'alimentation du fluide, et un corps-verrou (150) réalisé avec un évidement (152) semblable à un trou de serrure, et déplaçable radialement, contre lequel un épaulement (156) du corps de fixation et d'immobilisation (144) peut être pressé quand le fluide sous pression est alimenté dans le corps de fixation et d'immobilisation (144).

42. Procédé pour ébavurer des trous qui débouchent latéralement dans un évidement (14) sensiblement cylindrique, au moyen d'un dispositif selon l'une des revendications 36 à 41, **caractérisé en ce que** la pression du fluide qui est amené à travers l'outil (10) introduit dans l'évidement (14), est utilisé pour faire défléchir radialement la tête de coupe (22) sous forme d'une pièce rapportée et ainsi d'amener ladite au moins une arête de coupe (20*) en engagement avec la bavure à enlever.

43. Procédé selon la revendication 42, **caractérisé en ce que** la pression du fluide est élevée de telle façon que le fluide sortant hors de ladite au moins une ouverture d'embouchure (28) engendre un jet de coupe au moyen duquel on peut procéder à un usinage par enlèvement de matière.

44. Procédé selon la revendication 42 ou 43, **caractérisé par** les étapes suivantes :
a) introduction, dans l'évidement, de l'outil (10) qui exécute un mouvement de rotation relatif par rapport à une pièce à oeuvrer pourvue de l'évidement (14), et
b) établissement d'un écoulement du fluide mis sous pression à travers l'outil (10) avec déflexion radiale simultanée de la tête de coupe (22).

45. Procédé selon la revendication 44, **caractérisé en ce que** l'outil (10) et/ou la pièce à oeuvrer exécute un mouvement d'avance pendant l'étape de procédé b).

46. Procédé selon l'une des revendications 42 à 45, **caractérisé en ce que** l'outil (10) et/ou la pièce à oeuvrer est entraîné(e) à une vitesse de rotation dans la plage entre 100 et 50 000 tr/m.

47. Procédé selon l'une des revendications 42 à 46, **caractérisé en ce que** la vitesse de coupe est choisie dans la plage entre 20 et 300 m/min.
